# EUROPÄISCHE PATENTSCHRIFT

(11) **EP 2 976 558 B1**
(45) Veröffentlichungstag und Bekanntmachung des Hinweises auf die Patenterteilung: **27.02.2019**
(21) Anmeldenummer: 12812835.2
(22) Anmeldetag: 28.11.2012
(51) Int. Cl.: F16K 1/44, F16K 31/122

(54) **DOPPELSITZVENTIL MIT ANTRIEB**
DOUBLE SEAT VALVE WITH DRIVE
VANNE À DOUBLE SIÈGE AVEC ENTRAÎNEMENT DE COMMANDE

(30) Priorität: 03.12.2011 DE 102011120287
(43) Veröffentlichungstag der Anmeldung: 27.01.2016
(73) Patentinhaber: GEA Tuchenhagen GmbH, 21514 Büchen (DE)
(72) Erfinder: BURMESTER, Jens, 23883 Grambek (DE)
(74) Vertreter: Hauck Patentanwaltspartnerschaft mbB
(86) Internationale Anmeldenummer: PCT/EP2012/004899
(87) Internationale Veröffentlichungsnummer: WO 2013/079190

(56) Entgegenhaltungen:
- EP-B1- 0 866 934
- EP-B1- 1 725 795
- WO-A1-2005/093298

## Beschreibung

### TECHNISCHES GEBIET

Die Erfindung betrifft ein Doppelsitzventil, insbesondere ein sitzreinigungsfähiges Doppelsitzventil, das mit einem Antrieb zum Schalten des Ventils und mit zwei unabhängig voneinander bewegbaren Schließgliedern versehen ist, die zwischen sich einen Leckagehohlraum einschließen, der mit der Umgebung des Doppelsitzventils verbunden ist, wobei das erste Schließglied nach einem Teilhub an dem zweiten Schließglied zur Anlage kommt und dieses bei seiner weiteren Öffnungsbewegung gleichfalls in eine Offenstellung überführt, mit konzentrisch ineinander angeordneten Verstellstangen für die Schließglieder, die aus einem Ventilgehäuse nach außen heraus- und in den Antrieb hineingeführt sind und über die die Schließglieder, zusätzlich zu der Offenstellung und unabhängig voneinander, wahlweise jeweils in eine Teiloffenstellung verbringbar sind, wobei die Offenstellung durch eine Hauptverstelleinrichtung und die Teiloffenstellungen durch den jeweiligen Schließgliedern zugeordnete Einzelverstelleinrichtungen erzeugt werden und die Einzelverstelleinrichtungen zum Einen zwischen der Hauptverstelleinrichtung und dem Ventilgehäuse und zum Anderen zusammen mit der Hauptverstelleinrichtung in einem gemeinsamen Gehäuse des Antriebs angeordnet sind, mit einem ersten Antriebskolben der Hauptverstelleinrichtung, der in Richtung der zugeordneten Offenstellung an der ersten Verstellstange für das erste Schließglied gegen die Kraft einer ersten Feder angreift, und mit einem dritten Antriebskolben der zweiten Einzelverstelleinrichtung für das zweite Schließglied, der in Richtung der zugeordneten zweiten Teiloffenstellung zum Eingriff in eine Mitnahmeverbindung mit der zweiten Verstellstange des zweiten Schließglieds verbringbar ist, wobei der erste Antriebskolben auf seiner dem Ventilgehäuse zugewandten Seite einen ersten Druckmittelraum zur Erzeugung der vollen Offenstellung begrenzt und auf der dem ersten Druckmittelraum abgewandten Seite des dritten Antriebskolbens ein dritter Druckmittelraum zur Erzeugung der zweiten Teiloffenstellung vorgesehen ist und wobei der erste Antriebskolben unmittelbar oder mittelbar mit der ersten Ventilstange fest verbunden ist.

### STAND DER TECHNIK

Ein gattungsgemäßes Doppelsitzventil ist aus der EP 1 725 795 B1 bekannt. Dessen druckmittelbeaufschlagter Antrieb, der als Feder-Kolben-Antrieb ausgebildet ist, ist in zwei Konfigurationen einsetzbar, und zwar in einer ersten Konfiguration, die zur Betätigung eines sitzreinigungsfähigen Doppelsitzventils mit einem als Schieberkolben ausgebildeten ersten Schließglied und einem als Sitzteller ausgebildeten zweiten Schließglied geeignet ist. Die zweite Konfiguration ist geeignet, um ein sitzreinigungsfähige Doppelsitzventil mit zwei als Sitzteller ausgebildeten Schließgliedern zu betätigen. Bei der ersten Konfiguration sind die beiden Teiloffenstellungen gegenläufig und bei der zweiten Konfiguration sind die beiden Teiloffenstellungen gleichsinnig orientiert. Bei beiden Konfigurationen haben die volle Offenstellung und die zweite Teiloffenstellung des zweiten Schließglieds die gleiche Orientierung. Beide Konfigurationen sind bauteilidentisch aufgebaut, wobei in beiden Konfigurationen die erste Teiloffenstellung des ersten Schließglieds jeweils durch eine Spreizbewegung des ersten und des zweiten Antriebskolbens erzeugt wird. Bei der ersten Konfiguration ist der erste Antriebskolben auf der ersten Verstellstange begrenzt axial verschieblich angeordnet und der zweite Antriebskolben ist auf der ersten Verstellstange unverschieblich festgelegt. Bei der zweiten Konfiguration kehren sich die Anordnungsverhältnisse der beiden Antriebskolben auf der ersten Verstellstange um. Der erste Antriebskolben einer für die volle Offenstellung zuständigen Hauptverstelleinrichtung wird gegen die Kraft einer Feder bewegt, wobei diese Feder auf der einem Ventilgehäuse abgewandten Seite des ersten Antriebskolbens angeordnet ist. Durch diese Anordnung der Feder verlängert sich der Antrieb in Richtung des sich in ihm über den ersten Antriebskolben vollziehenden vollen Öffnungshubes notwendigerweise zusätzlich um einen axialen Bauraum, der der Aufnahme der vorgespannten Feder geschuldet ist.

Bei einem in der EP 0 866 934 B1 beschriebenen Antrieb für ein sitzreinigungsfähiges Doppelsitzventil, der ausschließlich die Eignung des vorstehend beschriebenen Antriebs der zweiten Konfiguration besitzt, ist die Feder, gegen den der Antriebskolben der Hauptverstelleinrichtung in die volle Offenstellung überführt wird, in gleicher Weise wie in der EP 1 725 795 B1, zwingend antriebsvergrößernd angeordnet.

Die beiden vorstehend beschriebenen bekannten Antriebe weisen auf ihrer dem Ventilgehäuse des Doppelsitzventils abgewandten Stirnseite einen Steuerkopf oder eine Steuereinheit auf, die vorzugsweise von einem eigenständigen Gehäuse umschlossen ist. Diese Anordnung der Steuereinheit erfordert eine Verlängerung der ersten Verstellstange in die Steuereinheit hinein, wenn eine Stellungserfassung des unabhängig angetriebenen ersten Schließgliedes erfolgen soll. Eine Stellungserfassung des abhängig angetriebenen zweiten Schließglieds ist in einer diesbezüglich angeordneten Steuereinheit nicht möglich. Neben dem Nachteil, die erste Verstellstange in die Steuereinheit hinein zu verlängern, ist weiterhin nachteilig, das eine derart angeordnete Steuereinheit die axiale Baulänge des Doppelsitzventils und seines Antriebs zusätzlich vergrößert.

Auch bei gattungsfremden Antrieben für sitzreinigungsfähige Doppelsitzventile findet sich im Stand der Technik stets die vorstehend beschriebene nachteilige Anordnung der Steuereinheit. Beispielsweise offenbart die DE 31 33 273 A1 einen sogenannten modular aufgebauten Antrieb für ein Doppelsitzventil, der unterhalb der Hauptverstelleinrichtung zur Erzeugung der Schließ- und vollen Offenstellung der beiden Schließglieder zwei unabhängig voneinander ansteuerbare Einzelverstelleinrichtungen zur Erzeugung jeweils einer Teiloffenstellung für jedes Schließglied aufweist, wobei die beiden Einzelverstelleinrichtungen zusammen eine eigenständige Einheit bilden. Auf der einem Ventilgehäuse abgewandten Stirnseite der Hauptverstelleinrichtung sind in einem eigenständigen Gehäuse Stellungsmeldeeinrichtungen für das unabhängig angetriebene Schließglied angeordnet. Darüber hinaus gelangt das Druckmittel zur Beaufschlagung der Hauptverstelleinrichtung in relativ aufwendiger Weise über einen Anschluss am Gehäuse der Stellungsmeldeeinrichtung und nachfolgend auf dem Weg über die Verstellstange in die Hauptverstelleinrichtung.

Die DE 40 14 474 C1 beschreibt einen als Steuerkopf bezeichneten Antrieb für ein Tellerventil, wobei sich oberhalb des Steuerkopfes in einer auf letzterem aufsitzenden Kappe im Abstand voneinander übereinander zwei berührungslose Signalgeber befinden, die die Schließ- bzw. Öffnungsstellung des Ventiltellers bei dementsprechend verlagerter Ventiltellerstange anzeigen.

Aus der WO 02/093 058 A1 ist eine Vorrichtung zur Steuerung der Schaltbewegung eines Ventils bekannt, das wenigstens eine ein Schließglied tragende, translatorisch bewegte Ventil- oder Verstellstange aufweist. Die wenigstens eine Ventilstange ist auf einer Seite eines Ventilgehäuses aus diesem heraus- und in einen druckmittelbeaufschlagten Antrieb hineingeführt, in dem sich eine Hauptverstelleinrichtung zur Erzeugung der Schließ- und vollen Offenstellung des Ventils und, falls es sich bei dem Ventil um ein sitzreinigungsfähiges Doppelsitzventil mit zwei Schließgliedern handelt, zwei unabhängig voneinander ansteuerbare Einzelverstelleinrichtungen zur Erzeugung jeweils einer Teiloffenstellung für jedes Schließglied befinden kann. Steuerungstechnisch sind die Einzelverstelleinrichtungen derart gegeneinander verriegelt, dass immer nur ein Schließglied eine Sitzreinigungsstellung einnehmen kann. Die Einzelverstelleinrichtungen können dabei neben der Hauptverstelleinrichtung integraler Bestandteil des Antriebs (sog. integraler Antrieb) sein oder sie ergänzen die Hauptverstelleinrichtung, entweder jeweils einzeln oder zusammen, in modularer Bauweise (modular aufgebauter Antrieb). Auf der dem Ventilgehäuse abgewandten Stirnseite des Antriebs ist ein Steuerkopf angeordnet, der in einem eigenständigen Gehäuse wenigstens ein Pilotventil zur Steuerung des Druckmittels, des weiteren einen Stellungsmelder, der an der Ventilstange des unabhängig betätigbaren Schließglieds angeschlossen ist und der die die Ventilstangenbewegung abbildende aktuelle Stellung der Ventilstange erfasst und diesbezügliche aktuelle Stellungsmeldungen liefert, sowie Mittel einer Steuerlogik aufnimmt. Bei den Pilotventilen handelt es sich vorzugsweise um elektromagnetisch betätigbare Hilfsventile.

Die DE 10 2006 039 493 A1 offenbart ein doppeltdichtendes Ventil mit einer sog. integrierten Antriebseinheit, die die beiden unabhängig voneinander verschiebbaren Schließglieder aus einer Schließstellung in eine volle Offenstellung und jedes Schließglied darüber hinaus wahlweise in eine Teiloffenstellung verbringen kann, wobei die Teiloffenstellungen in der vorstehend beschriebenen Weise gegeneinander verriegelt sind. Eine auf der einem Ventilgehäuse abgewandten Stirnseite der Antriebseinheit angeordnete Steuereinheit ist derart ausgestaltet, dass in ihr die Stellung beider Schließglieder, getrennt voneinander, erfasst werden kann. Zu diesem Zweck sind die als Hohlstange ausgebildete Verstellstange des ersten (oberen) und die in dieser angeordnete Verstellstange des zweiten (unteren) Schließglieds bis in die Steuereinheit hineingeführt, wo deren jeweilige Lage über mehrere zugeordnete Sensoren erfasst wird. Über die Anordnung von Pilotventilen zur Steuerung des die Druckmittelräume beaufschlagenden Druckmittels werden in der Druckschrift keine Angaben gemacht, jedoch ist zu vermuten, dass diesbezügliche Pilotventile, beispielsweise ausgebildet als elektromagnetisch betätigbare Hilfsventile, in der Steuereinheit Aufnahme finden, falls das Druckmittel für die anzusteuernden Druckmittelräume nicht jeweils aus der Umgebung an das Ventil herangeführt und von einer extern angeordneten Steuerung gesteuert wird.

Darüber hinaus ist aus der DE 35 01 739 C1 eine Anordnung zur Steuerung von Druckmittel für einen Antrieb eines Ventils bekannt, die ein eigenständiges Gehäuse aufweist, welches auf der einem Ventilgehäuse abgewandten Stirnseite des nicht näher beschriebenen Antriebs angeordnet ist. In dem Gehäuse ist neben einer angedeuteten Stellungsmeldeeinrichtung für die Ventilstange ein Verteilerstück vorgesehen, welches die notwendige Druckmittelverteilung für Standard- und Sonderfunktionen eines Ventils steuern kann, wenn dem Verteilerstück an seinen diversen Anschlüssen geeignete Hilfsventile (Pilotventile) zugeordnet sind.

In der DE 196 42 181 A1 ist ein Steuerkopf für Armaturen mit pneumatischem Antrieb für die Lebensmittel- und Getränkeindustrie offenbart, der in gleicher Position wie in den vorstehend genannten Dokumenten an dem Antrieb angeordnet ist und in seinem eigenständigen Gehäuse Mittel zum Anschließen und Verteilen von pneumatischen Leitungen, ein Magnetventil oder mehrere Magnetventile, ggf. Sensoren zur Überwachung der Stellung der Armatur und Bestandteile einer Steuerschaltung aufnimmt. Dabei handelt es sich bei den in Rede stehenden Armaturen um Rohrleitungsschalter im weitesten Sinne, deren Schließglieder eine Schwenk- oder Hubbewegung ausführen.
Allen vorstehend kurz umrissenen Antrieben in Verbindung mit einem Ventil und einer Steuereinheit oder Steuerkopf, die den derzeitigen Stand der Technik der Antriebe für Ventile, insbesondere Doppelsitzventile der Prozesstechnik, insbesondere auf dem Gebiet der Nahrungsmittel- und Getränkeindustrie, der Chemie, Pharmazie und Biotechnologie, beschreiben, ist gemeinsam, dass sich die Bauhöhe oder Baulänge über alle diese Komponenten im ungünstigsten Falle aus einer Addition dieser aneinandergereihten Komponenten ergibt. Im Regelfall ist die sich ergebende Gesamtlänge noch größer, da zwischen Ventilgehäuse und Antrieb pflichtgemäß ein sogenanntes Laternengehäuse mit Drainagefunktion anzuordnen ist, damit es bei Leckagen am Ventilgehäuse und/oder am Antrieb nicht zu einer Kontamination oder Vermischung zwischen feindlichen Fluiden, dem Druckmittel im Antrieb und einem Produkt im Ventilgehäuse, kommen kann.
Große Bauabmessungen erfordern in Prozessanlagen mit einer Vielzahl von Ventilen entsprechende Bauräume, die in vielen Fällen nicht zur Verfügung stehen oder deren Bereitstellung entsprechende Kosten verursacht. Die bisherigen Bemühungen, die Komponenten Laterne, Antrieb und Steuereinheit zumindest in Richtung ihrer notwendigen Aneinanderreihung, d.h. in der axialen Erstreckungsrichtung des Antriebs, kompakt und raumsparend auszubilden, sind unzureichend.

Es ist Aufgabe der vorliegenden Erfindung, ein gattungsgemäßes Doppelsitzventil hinsichtlich seines Antriebs derart weiterzuentwickeln, dass dieser zur Betätigung eines Doppelsitzventils mit einem als Schieberkolben und einem als Sitzteller ausgebildeten Schließglied (erste Konfiguration des Antriebs) oder mit zwei als Sitzteller ausgebildeten Schließgliedern (zweite Konfiguration des Antriebs) gleichermaßen geeignet und dabei gegenüber dem diesbezüglich bekannt gewordenen Stand der Technik in seinem Aufbau vereinfacht ist. Darüber hinaus besteht eine weitere Aufgabe der Erfindung darin, die Aggregation von Antrieb und Steuereinheit in ihrem Aufbau zu vereinfachen und die Bauhöhe der Aggregation, gemessen in der axialen Erstreckungsrichtung der Aggregation, gegenüber dem diesbezüglich bekannt gewordenen Stand der Technik signifikant zu reduzieren.

### ZUSAMMENFASSUNG DER ERFINDUNG

Die Aufgabe wird durch ein Doppelsitzventil mit den Merkmalen des Anspruchs 1 gelöst. Vorteilhafte Ausgestaltungen des Antriebs gemäß der Erfindung sind in den Unteransprüchen beschrieben.

Der erfinderische Grundgedanke besteht darin, allein dem ersten Antriebskolben, in jeder der beiden Konfigurationen, neben dem Bewegungsfreiheitsgrad nach Maßgabe des vollen Öffnungshubs zusätzlich einen begrenzten Bewegungsfreiheitsgrad nach Maßgabe des jeweiligen ersten Teilhubs T1, entweder in Richtung oder entgegen der Richtung der vollen Offenstellung H, zu geben. Dies gelingt für beide Konfigurationen dadurch, dass der erste Antriebskolben unmittelbar oder mittelbar mit der ersten Verstellstange fest verbunden und dass der einerseits vom ersten Antriebskolben begrenzte erste Druckmittelraum andererseits von einem das Gehäuse quer zur Längsachse des Antriebs durchsetzenden Gehäuseboden begrenzt ist. Dabei wird bei der zweiten Konfiguration des Antriebs der erste Teilhub T1 ursächlich durch einen zweiten Antriebskolben generiert, der in Richtung der vollen Offenstellung H zum Eingriff in eine Mitnahmeverbindung mit dem ersten Antriebskolben verbringbar ist. Bei der ersten Konfiguration des Antriebs entfällt der zweite Antriebskolben ersatzlos und der erste Antriebskolben wird dadurch um den ersten Teilhub T1 entgegen der Richtung der vollen Offenstellung H axial verschieblich.

Durch die erfindungsgemäße Anordnung des ersten Antriebskolbens in Bezug zur ersten Verstellstange und zum Gehäuseboden ist der Raum zwischen dem Gehäuseboden und dem Ventilgehäuse, ausgehend von dem Gehäuseboden, nunmehr erstmals für die Unterbringung der ersten Feder nutzbar. Beim bekannten gattungsgemäßen Antrieb ist die erste Feder auf der dem Ventilgehäuse abgewandten Seite des ersten Antriebskolbens angeordnet und vergrößert somit die Bauhöhe des Antriebs um die maximale Einbaulänge der ersten Feder.

Um die Bauhöhe des Antriebs, gemessen in der axialen Erstreckungsrichtung des Antriebs, signifikant gegenüber dem diesbezüglich bekanntgewordenen Stand der Technik zu reduzieren, sieht ein Vorschlag gemäß der Erfindung vor, dass die erste Feder zwischen dem Gehäuseboden und dem Ventilgehäuse angeordnet ist und jeweils unmittelbar oder mittelbar einerseits am Gehäuseboden und andererseits an der ersten Verstellstange angreift.

Ein weiterer erfinderischer Grundgedanke, der für sich gesehen eine eigenständige Erfindung darstellt, besteht darin, die gesamte Steuereinheit, und zwar mit einer vom jeweiligen Anwendungsfall abhängigen Minimal- bis zu einer Maximalausstattung mit Komponenten der vorstehend im Rahmen der Würdigung der einschlägigen Dokumente zum Stand der Technik erwähnten Art, von ihrer bisher eingenommenen Position auf einer dem Ventilgehäuse abgewandten Stirnseite des Antriebs in einen weniger abmessungskritischen Bereich des Antriebs zu verlagern, ohne dass die Steuereinheit dabei auf die Bauhöhe des Antriebs Einfluss nimmt. Dabei wird ein Raumbereich genutzt, der bislang ungenutzt blieb, und es ergeben sich darüber hinaus kürzere Zufuhr- und Verteilungswege für das Druckmittel von einem zentralen Druckmittelanschluss über das wenigstens eine Hilfsventil (Pilotventil) bis in den wenigstens einen nunmehr unmittelbar benachbarten Druckmittelraum. Ein Vorschlag der Erfindung sieht diesbezüglich vor, dass das Gehäuse in seinem dem Ventilgehäuse zugewandten Gehäuseabschnitt durch eine Steuereinheit gebildet ist, die im axialen Erstreckungsbereich des Antriebs einen radial außenseitigen Teil desselben bildet. Die Steuereinheit ist dazu geeignet, von einer Minimal- bis zu einer Vollausstattung Hilfsventile zur Steuerung des Druckmittels (erste Steuerungsmittel) und Mittel zur Stellungserfassung oder Wegmessung (zweite Steuerungsmittel) aufzunehmen. Darüber hinaus ist die vorgeschlagene Ausführungsform der Steuereinheit anwendbar auf Doppelsitzventile, die in der Steuereinheit ausschließlich zweite und keine ersten Steuerungsmittel besitzen und bei denen das Druckmittel in einer externen Steuereinheit gesteuert wird sowie weiterhin auf Doppelsitzventile, die nur erste und keine zweite Steuerungsmittel aufweisen.

Damit die erfindungsgemäß vorgesehene Anordnung der Steuereinheit in allen vorgenannten Anwendungsfällen eine allein durch antriebsspezifische Bauteile bestimmte größte äußere radiale Abmessung des Antriebs nicht notwendigerweise vergrößert und damit die gewünschte Reduzierung der Bauhöhe des Antriebs in Verbindung mit der Steuereinheit nicht zu Lasten dieser radialen Abmessungen des Antriebs geht, sieht ein Vorschlag vor, dass die Steuereinheit innerhalb der größten äußeren radialen Abmessung des Antriebs positioniert ist, wobei sich diese Abmessung allein aus den antriebsspezifischen Bauteilen des Antriebs generiert. Unter antriebsspezifische Bauteile sollen solche verstanden werden, die die Kinematik des Antriebs mechanisch definieren, also nicht die vorgenannten ersten und zweiten Steuerungsmittel, die bislang im Regelfall in der separaten Steuereinheit zusammengefasst sind.

Eine verbesserte Ausnutzung des durch die erfindungsgemäßen Lösungsmerkmale in Anspruch genommenen Bauraumes des Antriebs ist gemäß einem weiteren Vorschlag dann gegeben, wenn die Steuereinheit ringförmig ausgebildet ist. Eine optimale Ausnutzung des vorstehend erwähnten Bauraumes ergibt sich, wenn die ringförmige Steuereinheit, wie dies gleichfalls vorgesehen ist, in sich geschlossen ausgeführt ist. In diesem Falle steht für die Steuereinheit der gesamte periphere, radial außenseitige Bereich des Antriebs zur Verfügung, wobei dadurch gleichzeitig auch die Möglichkeit gegeben ist, die Bauteile der Steuereinheit und jene des Antriebs auf möglichst kurzem Wege in der notwendigen Weise einander zuzuordnen, zu verbinden und/oder miteinander kommunizieren zu lassen.

Eine vorteilhafte Ausführungsform der vorgeschlagenen Anordnung ergibt sich, wenn die Steuereinheit auf der dem Ventilgehäuse zugewandten Seite des ersten Antriebskolbens angeordnet und dort mit einem Gehäuseboden form- und/oder kraftschlüssig verbunden ist. Damit bleibt die ringförmige Steuereinheit innerhalb der größten äußeren radialen Abmessungen des ersten Arbeitskolbens, der im Regelfall den durchmessergrößten Antriebskolben darstellt, wenn weitere Antriebskolben der Einzelverstelleinrichtungen vorzusehen sind. Die Verbindung zwischen dem Gehäuse des Antriebs und der Steuereinheit ist vorzugsweise form- und kraftschlüssig ausgeführt, indem beispielsweise zum Einen eine eindeutige und formschlüssige Zuordnung zwischen Gehäuse und Steuereinheit vorgesehen ist und zum Anderen letztere mit dem Gehäuseboden oder dem Gehäuse zusätzlich verschraubt ist.

Durch die vorstehend vorgeschlagene form- und/oder kraftschlüssige Anbindung der Steuereinheit an den Gehäuseboden oder das Gehäuse des Antriebs steht ein Bauraum innerhalb der ringförmigen Steuereinheit zur Verfügung, in dem ein Abschnitt der ersten Feder sowie ein dritter Antriebskolben des Antriebs auf der dem Ventilgehäuse zugewandten Seite des Gehäusebodens angeordnet sind.

Die erfindungsgemäß angeordnete Steuereinheit schafft auf konstruktiv überraschend einfache Weise die Möglichkeit, dass die Steuereinheit sämtliche Anschlüsse und Kanäle zur Steuerung eines Druckmittels zur Beaufschlagung der maximal vier Druckmittelräume durch wenigstens ein Pilotventil, sämtliche Anschlüsse, elektrische Leitungen und Signalleitungen wenigstens eines Mittels zur Stellungserfassung oder Wegmessung und sämtliche Mittel einer Steuerlogik aufnimmt.

Damit der vierte Druckmittelraum sowohl für die Erzeugung des ersten Teilhubs T1 im Rahmen der ersten Konfiguration des Antriebs als auch zur Erzeugung einer Zusatzkraft zur Unterstützung der ersten Feder im Rahmen der zweiten Konfiguration des Antriebs nutzbar ist, sieht ein weiterer Vorschlag vor, dass im ersten Antriebskolben eine Hohlstange fest verankert ist, die, ausgehend von dem ersten Antriebskolben, den Gehäuseboden verschieblich und abgedichtet durchdringt, verschieblich in eine erste Grundlochbohrung in der Steuereinheit eingreift und dort endet, dass ein die Hohlstange durchgängig durchsetzender Innenkanal den vierten Druckmittelraum mit der ersten Grundlochbohrung fluidgängig verbindet, und dass der ersten Grundlochbohrung ein viertes Druckmittel zugeführt werden kann.

Innerhalb der erfindungsgemäßen Steuereinheit lässt sich auf einfache Weise auch eine Stellungserfassung oder Wegmessung des ersten Schließgliedes durchführen, wenn, wie dies ein weiterer Vorschlag vorsieht, im ersten Antriebskolben eine Stange fest verankert ist, die, ausgehend von dem ersten Antriebskolben, den Gehäuseboden verschieblich und abgedichtet durchdringt, verschieblich in eine zweite Grundlochbohrung in der Steuereinheit eingreift und dort endet, und wenn der Stange wenigstens das erste Mittel zur Stellungserfassung oder Wegmessung zugeordnet ist.

Um den von der Steuereinheit an der Peripherie und im radial außenseitigen Bereich des Antriebs zur Verfügung gestellten Bauraum für alle Steuerungskomponenten gleichermaßen optimal zu nutzen, ist weiterhin vorgesehen, dass die Hohlstange und die Stange diametral im ersten Antriebskolben angeordnet sind.

Mit der erfindungsgemäßen Steuereinheit ist es erstmals möglich, die Stellungserfassung oder Wegmessung des zweiten Schließgliedes mit sehr geringem Aufwand in der Steuereinheit selbst zu realisieren und nicht, wie im Stand der Technik üblich, mit Mitteln im Bereich des Laternengehäuses, wo die zweite Verstellstange von außen zugänglich ist, oder indirekt über die erste Verstellstange. Die Erfindung sieht diesbezüglich vor, dass dem antriebsseitigen Ende der zweiten Verstellstange ein in der Steuereinheit angeordnetes drittes Mittel zur Stellungserfassung oder Wegmessung zugeordnet ist.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen eines Antriebs zum Schalten eines sitzreinigungsfähigen Doppelsitzventils realisiert ist, werden in der Zeichnung die erfindungsgemäßen Merkmale an den zwei unterschiedlichen Konfigurationen des Antriebs, nämlich einem Antrieb für ein sitzreinigungsfähiges Doppelsitzventil mit zwei als Sitzteller ausgebildeten Schließgliedern (zweiter Ventiltyp, zweite Konfiguration des Antriebs) sowie einem sitzreinigungsfähigen Doppelsitzventils mit einem als Schieberkolben und einem als Sitzteller ausgebildeten Schließglied (erster Ventiltyp; erste Konfiguration des Antriebs), dargestellt und nachfolgend nach Aufbau und Funktion beschrieben. Es zeigen
- **Figur 1**: im Meridianschnitt ein sitzreinigungsfähiges Doppelsitzventil des zweiten Ventiltyps in seiner Schließstellung mit einem Antrieb und einer in diesem integrierten Steuereinheit gemäß der Erfindung;
- **Figur 1a**: gleichfalls im Meridianschnitt das Doppelsitzventil gemäß **Figur 1** in seiner Offenstellung mit einem entsprechend betätigten Antrieb und einer Steuereinheit gemäß der Erfindung;
- **Figur 1b**: gleichfalls im Meridianschnitt das Doppelsitzventil gemäß **Figur 1** in einer Sitzreinigungsstellung seines ersten, bezogen auf die Darstellungslage, unteren Schließglieds mit dem entsprechend betätigten Antrieb und der Steuereinheit gemäß der Erfindung;
- **Figur 1c**: gleichfalls im Meridianschnitt das Doppelsitzventil gemäß **Figur 1** in einer Sitzreinigungsstellung seines zweiten, bezogen auf die Darstellungslage, oberen Schließglieds mit dem entsprechend betätigten Antrieb und der Steuereinheit gemäß der Erfindung;
- **Figur 2**: im Meridianschnitt ein sitzreinigungsfähiges Doppelsitzventil des ersten Ventiltyps in seiner Schließstellung mit einem Antrieb und einer Steuereinheit gemäß der Erfindung;
- **Figur 2a**: gleichfalls im Meridianschnitt das Doppelsitzventil gemäß **Figur 2** in einer Sitzreinigungsstellung seines ersten, bezogen auf die Darstellungslage, unteren Schließglieds mit dem entsprechend betätigten Antrieb und der Steuereinheit gemäß der Erfindung;
- **Figur 2b**: gleichfalls im Meridianschnitt einen Ausschnitt aus dem Antrieb des Doppelsitzventils in Verbindung mit einem Laternengehäuse gemäß **Figur 2** in einer gegenüber der Schnittlage nach Figur 2 verdrehten Schnittlage, aus der die Befestigung der erfindungsgemäßen Steuereinheit an einem Gehäuseboden des Antriebs ersichtlich ist;
- **Figur 3**: einen Querschnitt durch das Doppelsitzventil gemäß **Figur 1** mit dem Antrieb und der Steuereinheit gemäß der Erfindung entsprechend einem in **Figur 1b** mit **A-B** gekennzeichneten Schnittverlauf und
- **Figur 4**: eine perspektivische Darstellung der erfindungsgemäßen Steuereinheit entsprechend einer Ausstattung gemäß den **Figuren 1** bis **2b****,** wobei die Steuereinheit zur Darstellung ihrer Einbettungslage in den Antrieb einerseits von einem ersten Antriebskolben und andererseits von dem Laternengehäuse berandet ist.

### DETAILLIERTE BESCHREIBUNG

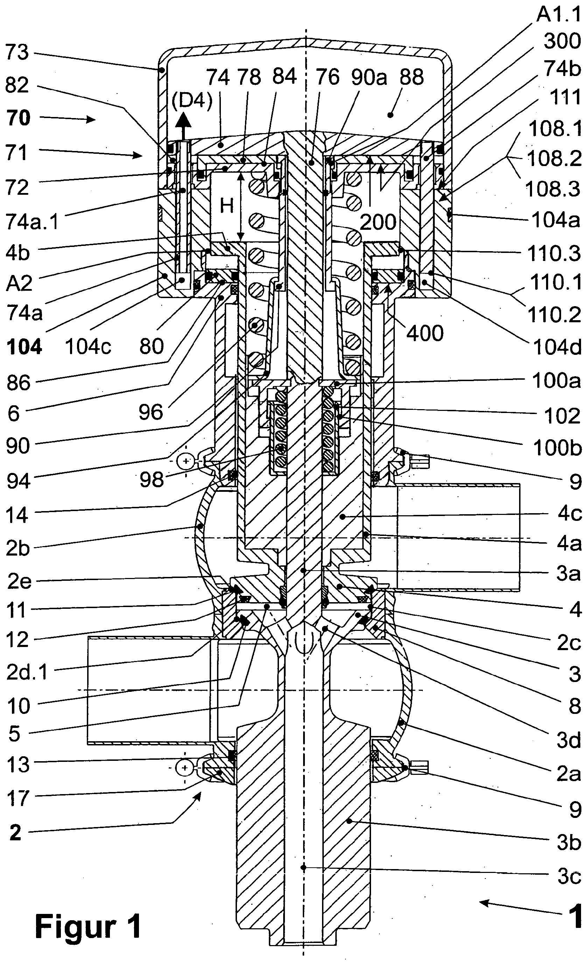

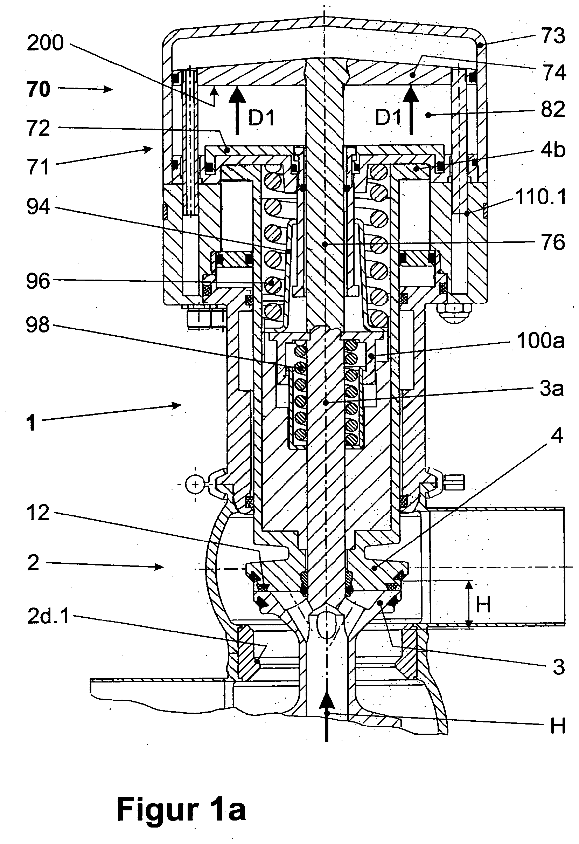

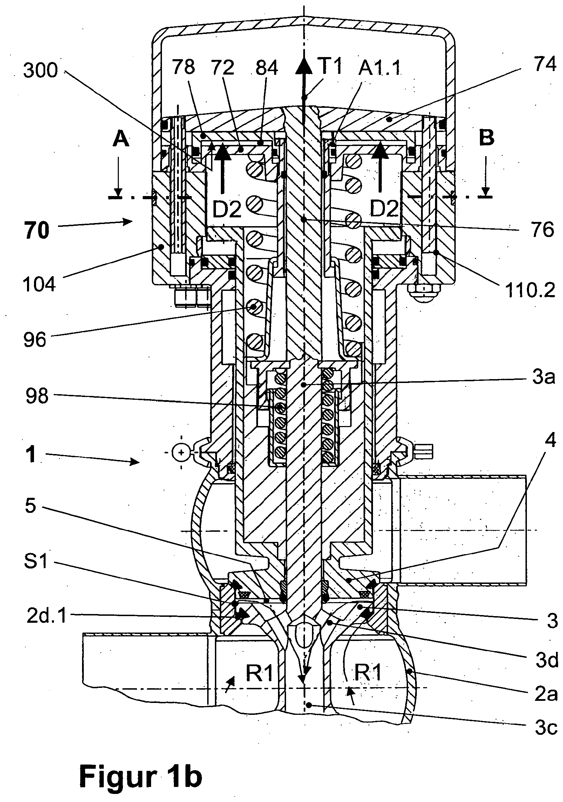

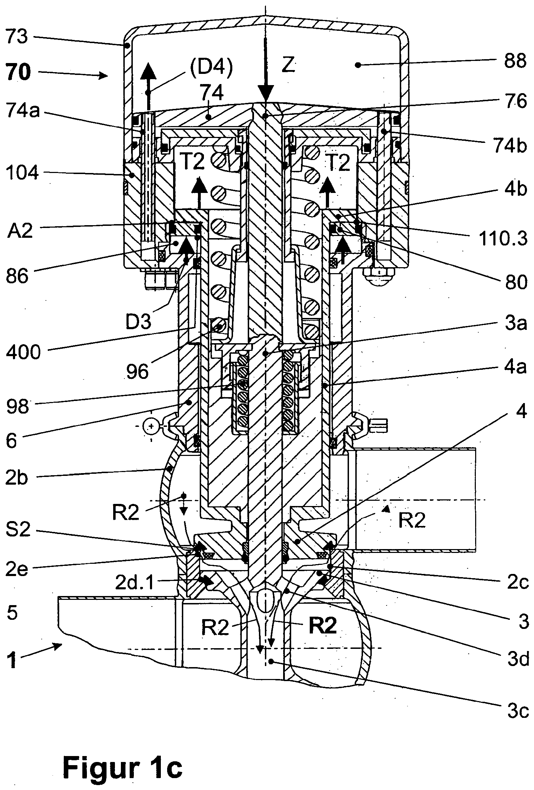

Ein sitzreinigungsfähiges Doppelsitzventil 1 vom zweiten Ventiltyp in Verbindung mit einem erfindungsgemäßen Antrieb 70 ist in seiner Schließstellung in **Figur 1** dargestellt. Es weist zwei seriell angeordnete, relativ zueinander bewegbare, jeweils als Sitzteller ausgebildete Schließglieder 3, 4 auf, die in der Schließstellung des Doppelsitzventils 1 das Überströmen von Fluiden von einem Ventilgehäuseteil 2a, 2b eines Ventilgehäuses 2 in das andere 2b, 2a durch eine diese Ventilgehäuseteile 2a, 2b miteinander verbindende Verbindungsöffnung 2c verhindern und die sowohl in der Schließ- als auch in einer Offenstellung einen Leckagehohlraum 5 begrenzen, der mit der Umgebung des Doppelsitzventils 1 verbunden ist. Die Verbindung des Leckagehohlraumes 5 mit der Umgebung erfolgt über mindestens eine Verbindungsöffnung 3d im ersten Schließglied 3, die in eine Ablaufbohrung 3c eines am ersten Schließglied 3 angeordneten Rohrschaftes 3b ausmündet.

In der Schließstellung wirkt das erste Schließglied 3 über eine erste Sitzdichtung 10 mit einer ersten Sitzfläche 2d.1 zusammen, die in der die Ventilgehäuseteile 2a, 2b miteinander verbindenden Verbindungsöffnung 2c vorgesehen ist. Die Verbindungsöffnung 2c kann unmittelbar im ersten und/oder im zweiten Ventilgehäuseteil 2a, 2b oder mittelbar in einem Sitzring 8, der in die Ventilgehäuseteile 2a und/oder 2b form- und/oder stoffschlüssig eingebettet ist, ausgebildet sein. Im Zuge seiner Öffnungsbewegung kommt das erste Schließglied 3 am zweiten Schließglied 4 dichtend zur Anlage und überführt letzteres bei der weiteren Öffnungsbewegung gleichfalls in eine Offenstellung, die am Ende des Öffnungsvorganges in einer vollen Offenstellung H endet (**Figur 1a**). Das zweite Schließglied 4 wirkt über eine zweite Sitzdichtung 11 mit einer zweiten Sitzfläche 2e zusammen, und eine in der Stirnseite des zweiten Schließglieds 4, die dem ersten Schließglied 3 zugewandt ist, angeordnete Mitteldichtung 12 sorgt in jeder Teiloffenstellung beider Schließglieder 3, 4 und bis hin zur vollen Offenstellung H für eine Abdichtung der Schließglieder 3, 4 gegeneinander und damit auch für eine sichere Abdichtung des Leckagehohlraumes 5 gegenüber den Innenräumen der miteinander verbundenen Ventilgehäuseteile 2a, 2b.

Der Rohrschaft 3b kann, wie beispielhaft dargestellt, als erster Druckausgleichskolben ausgebildet sein und wird über einen Gehäusering 17 im ersten Ventilgehäuseteil 2a in die Umgebung abgedichtet herausgeführt, wobei die Abdichtung gegenüber dem ersten Ventilgehäuseteil 2a mittels einer ersten Stangendichtung 13 und die Führung in dem Gehäusering 17 mittels eines nicht dargestellten Führungsrings erfolgen. Die Bemessung des Rohrschaftes 3b in Form eines ersten Druckausgleichkolbens erfolgt in der Regel derart, dass sein Außendurchmesser annähernd dem Außendurchmesser des von der ersten Sitzdichtung 11 umschlossenen Querschnitts entspricht. Die Verbindung des Gehäuserings 17 mit dem ersten Ventilgehäuseteil 2a erfolgt mittels eines Spannrings 9.

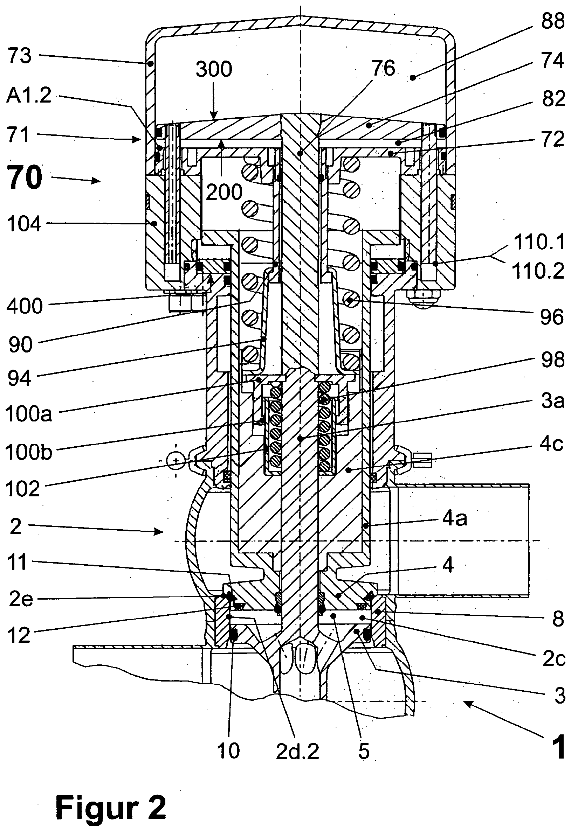

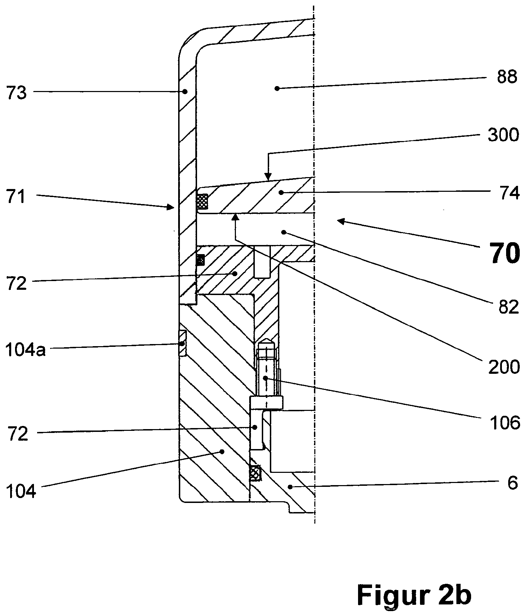

Das erste Schließglied 3 ist mit einer ersten Verstellstange 3a und das zweite Schließglied 4 ist mit einer letztere konzentrisch umschließenden, als Hohlstange und vorzugsweise in Form eines zweiten Druckausgleichskolbens ausgebildeten zweiten Verstellstange 4a verbunden. Die Bemessung des zweiten Druckausgleichkolbens erfolgt nach den gleichen Kriterien, nach denen der erste ausgelegt ist, d.h. dass der Außendurchmesser des zweiten Druckausgleichkolbens annähernd dem Außendurchmesser des von der zweiten Sitzdichtung 11 umschlossenen Querschnitts entspricht. Die Verstellstangen 3a, 4a sind einseitig aus dem zweiten Ventilgehäuseteil 2b heraus- und auf dem Weg über ein sich anschließendes Laternengehäuse 6 in den erfindungsgemäßen Antrieb 70 hineingeführt. Das Laternengehäuse 6 ist an seinem dem zweiten Ventilgehäuseteil 2b abgewandten Ende mit einem Gehäuseboden 72 des Antriebs 70 fest verbunden, vorzugsweise form- und kraftschlüssig, beispielsweise mittels Verschraubung (**Figur 2b**). Die erste Verstellstange 3a ist im axialen Erstreckungsbereich des Laternengehäuses 6 mit einer Kolbenstange 76 fest verbunden, wobei letztere den Gehäuseboden 72 mittelbar abgedichtet durchdringt und an ihrem anderen Ende in fester Verbindung an einem ersten Antriebskolben 74 angreift. Die feste Verbindung zwischen dem Laternengehäuse 6 und dem zweiten Ventilgehäuseteil 2b stellt beispielsweise ein weiterer Spannring 9 her. Die zweite Verstellstange 4a findet ihre verschiebliche Adichtung an ihrer Durchdringungsstelle in dem zweiten Ventilgehäuseteil 2b in einer dort angeordneten zweiten Stangendichtung 14, sie durchdringt über eine nicht näher bezeichnete Abdichtung verschieblich abgedichtet das antriebsseitige Ende des Laternengehäuses 6 und endet im Antrieb 70.

Im erfindungsgemäßen Antrieb 70, der außenseits von einem Gehäuse 71 (**Figuren 1a****,** **1**) berandet ist, bilden der erste Antriebskolben 74 und das diesem zugewandte Ende des Gehäusebodens 72 zwischen sich einen mit einem ersten Druckmittel D1 beaufschlagbaren ersten Druckmittelraum 82 aus, der radial außenseits von einem Gehäuse-Deckelteil 73 begrenzt ist. Der erste Antriebskolben 74, der Gehäuseboden 72 und der Mantelbereich des Gehäuse-Deckelteils 73 bilden mit dem umgrenzten ersten Druckmittelraum 82 eine Hauptverstelleinrichtung 200 zur Erzeugung der vollen Offenstellung H. Die Öffnungsbewegung des Doppelsitzventils 1 wird aus der dargestellten Schließstellung eingeleitet und die volle Offenstellung H wird erreicht, wenn dem ersten Druckmittelraum 82 das erste Druckmittel D1 über einen nicht dargestellten und bezeichneten Weg zugeführt wird.

Der Gehäuse-Deckelteil 73 überspannt auch raumbildend den ersten Antriebskolben 74, wobei letzterer gleichzeitig radial außenseits im Gehäuse-Deckelteil 73 abgedichtet geführt ist, und zwischen dem ersten Antriebskolben 74 und dem Gehäuse-Deckelteil 73 ist ein vierter Druckmittelraum 88 gebildet (**Figur 1**). Das dem ersten Antriebskolben 74 zugewandte Ende des Gehäusebodens 72 geht radial innenseits und in Richtung des Laternengehäuses 6 in eine vorzugsweise eingeschraubte feste Hülse 90 über, die an ihrem anderen, freien Ende von einer beweglichen Hülse 94 derart formschlüssig umschlossen ist, dass die bewegliche Hülse 94 auf der gesamten Länge der festen Hülse 90 axial verschieblich ist, am freien Ende der festen Hülse 90 und in Richtung des Laternengehäuses 6 jedoch an der festen Hülse 90 zur Anlage gelangt. Das der festen Hülse 90 abgewandte Ende der beweglichen Hülse 94 dient einer ersten Feder 96, vorzugsweise einer Schraubenfeder, als Abstützung, wobei sich die erste Feder 96 andererseits im radial innenseitigen Bereich des Gehäusebodens 72 abstützt. Der Gehäuseboden 72, die feste Hülse 90 und die bewegliche Hülse 94 bilden somit einen sog. Federkäfig für die erste Feder 96, der letztere in der Anschlagposition der beweglichen Hülse 94 an der festen Hülse 90 um einen definierten Betrag vorspannt. In Zwischenpositionen ist die Spannung der ersten Feder 96 gegenüber der vorg. Vorspannung entsprechend erhöht. In der dargestellten Schließstellung und in jeder anderen Teiloffenstellung der Schließglieder 3, 4 bis hin zu einer vollen Offenstellung H (**Figur 1a**) stützt sich das der festen Hülse 90 abgewandte Ende der beweglichen Hülse 94 auf einem Federwiderlager 100a, angeordnet an der ersten Verstellstange 3a, ab, sodass die erste Feder 96 die erste Verstellstange 3a und damit das erste Schließglied 3 stets in Richtung zur ersten Sitzfläche 2d.1 mit ihrer jeweiligen Vorspannkraft beaufschlagt.

Auf der dem ersten Antriebskolben 74 abgewandten Stirnseite des Gehäusebodens 72 ist erfindungsgemäß im axialen Erstreckungsbereich des Antriebs 70 eine Steuereinheit 104 angeordnet, die einen radial außenseitigen Teil desselben bildet. Diese Steuereinheit 104 ist vorzugsweise innerhalb der größten radialen Abmessung des Antriebs 70 positioniert, wobei sich diese Abmessung allein aus den antriebsspezifischen Bauteilen, d.h. den seine Kinematik mechanisch definierenden Bauteilen, generiert. Im Ausführungsbeispiel bestimmt sich diese größte radiale Abmessung aus dem äußeren Durchmesser des Gehäuses 71, der im Regelfall durch den Durchmesser des Gehäuse-Deckelteils 73 bestimmt ist, in dem der erste Antriebskolben 74 unmittelbar axial verschieblich und abgedichtet geführt ist. Der Außendurchmesser der Steuereinheit 104 wird vorzugsweise so bemessen, dass die Steuereinheit 104 und der Gehäuse-Deckelteil 73 radial außenseits bündig ineinander übergehen und zusammen das Gehäuse 71 bilden.

Die Steuereinheit 104 ist vorzugsweise ringförmig und in sich geschlossen ausgeführt, und sie ist mit dem Gehäuseboden 72 vorzugsweise form- und kraftschlüssig mittels Befestigungsmitteln 106 (**Figur 2b**), beispielsweise Schrauben, fest verbunden. Aus den **Figuren 1** und **2b** ist ersichtlich, dass die Steuereinheit 104 zum Einen unter den vorstehend beschriebenen radialen Abmessungsbedingungen mit dem Gehäuseboden 72 fest verbunden ist und zum Anderen das dem Ventilgehäuse 2 abgewandte Ende des Laternengehäuses 6 umschließt.

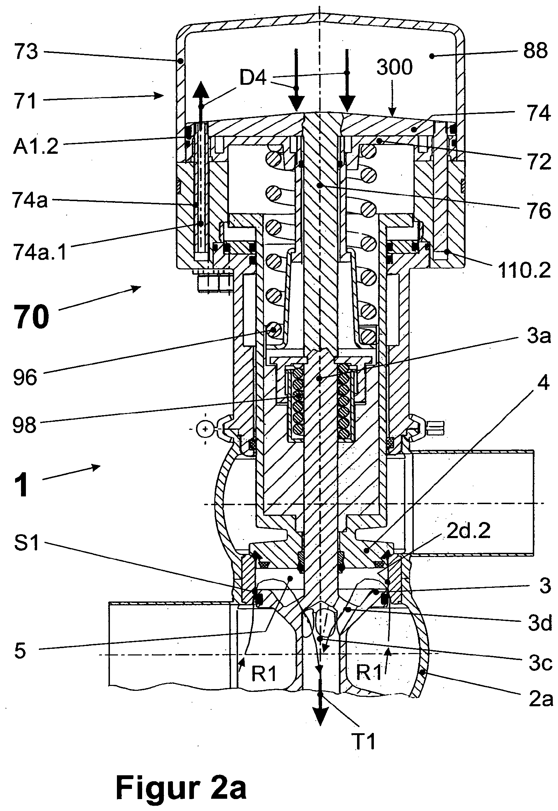

Im radial außenseitigen Bereich des ersten Antriebskolbens 74 sind in diametraler Anordnung eine Hohlstange 74a und eine Stange 74b fest angeordnet, die jeweils andererseits durch den Gehäuseboden 72 verschieblich und abgedichtet hindurchgreifen und anschließend in einer ersten Grundlochbohrung 104c (Hohlstange 74a) bzw. einer zweiten Grundlochbohrung 104d (Stange 74b) in der ringförmigen Steuereinheit 104 mit radialem Spiel eingreifen. Die Hohlstange 74a greift vollständig durch den ersten Antriebskolben 74 hindurch, sodass dem vierten Druckmittelraum 88 über einen innenseits in der Hohlstange 74a ausgebildeten Innenkanal 74a.1 ein viertes Druckmittel D4, (D4) zugeführt werden kann. Eine diesbezügliche Zufuhr von viertem Druckmittel (D4) ist dann erforderlich, wenn beim Doppelsitzventil 1 vom zweiten Ventiltyp das als Sitzteller ausgebildete erste Schließglied 3 in seiner Schließstellung mit einer Zusatzkraft Z zusätzlich zur in der Schließstellung wirkenden Vorspannkraft der ersten Feder 96 auf die erste Sitzfläche 2d.1 gedrückt werden soll (**Figur 1c**). Beim Doppelsitzventil vom ersten Ventiltyp dient die Zufuhr von viertem Druckmittel D4 der Erzeugung eines ersten Teilhubs T1 des ersten Schließglieds 3 (**Figur 2a**).

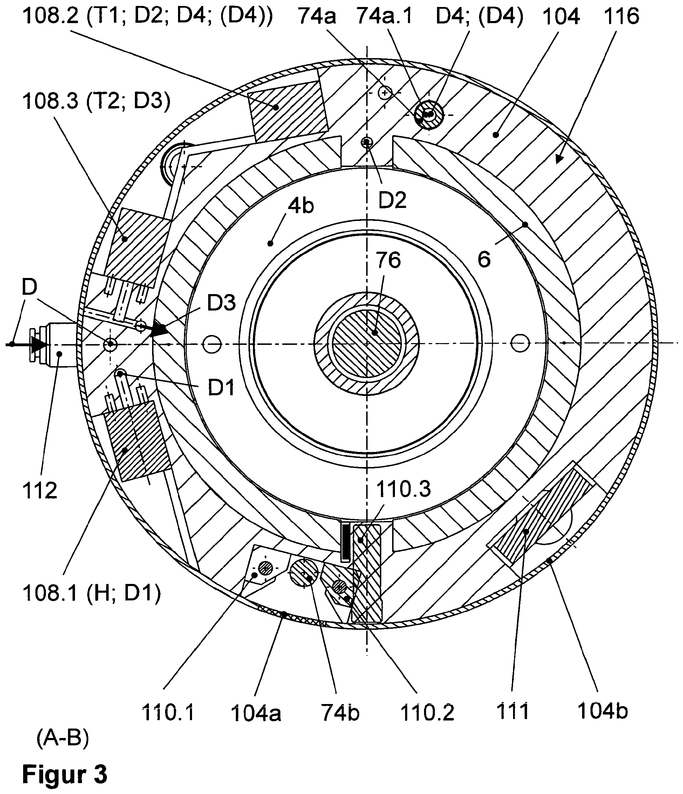

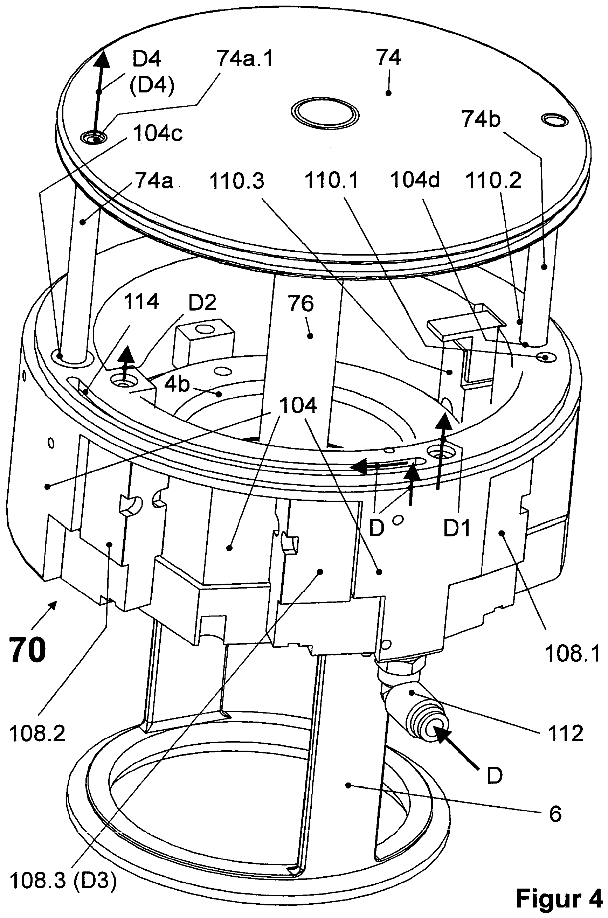

Die Stange 74b ist dazu bestimmt, mit ihrem dem ersten Antriebskolben 74 abgewandten Ende dessen jeweilige Stellung zwischen der Schließ- und der vollen Offenstellung H abzubilden. Wenigstens ein erstes Mittel zur Stellungserfassung oder Wegmessung 110.1 kann derart in der Steuereinheit 104 positioniert sein, dass dieses erste Mittel 110.1 Stellungsmeldungen vom Ende der Stange 74b liefert. Darüber hinaus kann die Steuereinheit 104 im Regelfall mindestens ein erstes Pilotventil 108.1 zur Steuerung eines Druckmittels D aufnehmen, falls nicht eine externe Steuerung dafür vorgesehen ist. Hinsichtlich einer diesbezüglichen Anordnung wird auf die **Figuren 3** und **4** und die zugeordnete Beschreibung verwiesen. Die Steuereinheit 104 kann auch radial außenseits, damit für einen Betrachter leicht sichtbar, wenigstens einen Leuchtmelder 104a aufweisen (**Figuren 1** und **2b**), der in unterschiedlichsten geometrischen Erscheinungsformen ausgeprägt sein kann (kreisförmig oder begrenzt streifenförmig und dabei axial oder peripher verlaufend oder streifenförmig peripher umlaufend) und Schalt- und/oder andere Betriebszustände des Doppelsitzventils 1 optisch anzeigt.

Zwischen dem ersten Antriebskolben 74 und dem Gehäuseboden 72 ist ein ringförmig ausgebildeter zweiter Antriebskolben 78 angeordnet, der radial außen- und innenseits im Gehäuseboden 72 jeweils axial verschieblich und abgedichtet geführt ist, sodass zwischen dem Gehäuseboden 72 und dem zweitem Antriebskolben 78 ein zweiter Druckmittelraum 84 gebildet ist. Der zweite Antriebskolben 78 besitzt einen begrenzten axialen Hub, da er einerseits am ortsfesten Gehäuseboden 72 und andererseits an einem Anschlagabschnitt 90a der festen Hülse 90, der als erster Anschlag A1.1 wirkt, zur Anlage kommt. Im Rahmen dieses begrenzten Hubs können, ausgehend von der Schließstellung des Doppelsitzventils 1, der erste Antriebskolben 74 bei Beaufschlagung des zweiten Druckmittelraumes 84 mit einem zweiten Druckmittel D2 (s. **Figur 1b**) und damit das mit ihm fest verbundene erste Schließglied 3, bezogen auf die Darstellungslage, nach oben um den ersten Teilhub T1 verschoben werden. Der erste Teilhub T1 selbst resultiert, nachdem der zweite Antriebskolben 78 in eine Mitnahmeverbindung mit dem ersten Antriebskolben 74 gelangt ist, aus dem dann vorliegenden axialen Abstand zwischen der maßgeblichen Oberkante des zweiten Antriebskolbens 78 und dem zugeordneten ersten Anschlag A1.1. Mit dem ersten Teilhub T1 wird das erste Schließglied 3 in eine erste Teiloffenstellung T1, eine erste Sitzreinigungsstellung, überführt, in der zwischen einem nicht bezeichneten leckageraumseitigen zylindrischen Ansatz am ersten Schließglied 3 und der Verbindungsöffnung 2c ein als Drosselspalt wirkender erster Ringspalt S1 gebildet ist (**Figur 1b**), über den eine erste Sitzreinigungsströmung R1 aus dem ersten Ventilgehäuseteil 2a über die freigelegte erste Sitzfläche 2d.1 in den Leckagehohlraum 5 und von dort über die Verbindungsöffnungen 3d und die Ablaufbohrung 3c in die Umgebung des Doppelsitzventils 1 gelangen kann.

Der zweite Antriebskolben 78 und der Gehäuseboden 72 bilden mit dem umgrenzten zweiten Druckmittelraum 84 eine erste Einzelverstelleinrichtung 300 zur Erzeugung der ersten Teiloffenstellung T1. Die erste Teiloffenstellung T1 wird aus der in **Figur 1** ersichtlichen Schließstellung eingeleitet und schließlich erreicht, wenn dem zweiten Druckmittelraum 84 das zweite Druckmittel D2 über einen nicht dargestellten und bezeichneten Weg zugeführt wird (**Figur 1b**).

In der antriebsseitigen Stirnseite des Laternengehäuses 6 ist ein ringförmig ausgebildeter dritter Antriebskolben 80 angeordnet (**Figur 1**), der radial außenseits im Laternengehäuse 6 und radial innenseits auf der als Hohlstange ausgebildeten zweiten Verstellstange 4a jeweils axial verschieblich und abgedichtet geführt ist, sodass zwischen Laternengehäuse 6 und drittem Antriebskolben 80 ein dritter Druckmittelraum 86 gebildet ist (s. auch **Figur 1c**).

Der dritte Antriebskolben 80 besitzt einen begrenzten axialen Hub, da er einerseits am ortsfesten Laternengehäuse 6 und andererseits an einem nicht bezeichneten radialen Rücksprung der mit dem ortsfesten Gehäuseboden 72 fest verbundenen Steuereinheit 104 zur Anlage kommt, wobei der radiale Rücksprung als dritter Anschlag A2 fungiert (s. **Figuren 1** und **1c**). Am antriebsseitigen Ende der zweiten Verstellstange 4a ist ein Rezessabschnitt 4b ausgebildet, der, bezogen auf die Darstellungslage und in der Schließstellung des Doppelsitzventils 1, mit seiner Unterkante um einen definierten axialen Abstand unterhalb des dritten Anschlags A2 endet. Nach Maßgabe dieses axialen Abstands können bei Beaufschlagung des dritten Druckmittelraumes 86 mit einem dritten Druckmittel D3 der Rezessabschnitt 4b und damit das mit diesem über die zweite Verstellstange 4a fest verbundene zweite Schließglied 4 nach oben um einen zweiten Teilhub T2 verschoben werden. Mit diesem zweiten Teilhub T2 wird das zweite Schließglied 4 in eine zweite Teiloffenstellung T2, eine zweite Sitzreinigungsstellung, überführt, in der zwischen einem nicht bezeichneten leckageraumseitigen zylindrischen Ansatz am zweiten Schließglied 4 und der Verbindungsöffnung 2c ein als Drosselspalt wirkender zweiter Ringspalt S2 gebildet ist, über den eine zweite Sitzreinigungsströmung R2 aus dem zweiten Ventilgehäuseteil 2b über die freigelegte zweite Sitzfläche 2e in den Leckagehohlraum 5 und von dort über die Verbindungsöffnungen 3d und die Ablaufbohrung 3c in die Umgebung des Doppelsitzventils 1 gelangen kann (**Figur 1c**).

Der dritte Antriebskolben 80 und das Laternengehäuse 6 bilden mit dem umgrenzten dritten Druckmittelraum 86, der mit dem dritten Druckmittel D3 beaufschlagbar ist, eine zweite Einzelverstelleinrichtung 400 zur Erzeugung der zweiten Teiloffenstellung T2. Die zweite Teiloffenstellung T2 wird aus der in **Figur 1** ersichtlichen Schließstellung eingeleitet und schließlich erreicht, wenn dem dritten Druckmittelraum 86 das dritte Druckmittel D3 über einen nicht dargestellten und bezeichneten Weg zugeführt wird (**Figur 1c**).

Im axialen Erstreckungsbereich des Laternengehäuses 6 (**Figur 1**) befindet sich in fester Verbindung mit der ersten Verstellstange 3a das Federwiderlager 100a und ein an diesem ausgebildeter Federwiderlager-Rezess 100b. In letzteren greift, bezogen auf die Darstellungslage, von unten ein Federgehäuse 102 verschieblich ein, welches nach unten am Herausgleiten gehindert wird. Das Federgehäuse 102 nimmt eine zweite Feder 98 auf, die sich untenseits am Federgehäuse 102 und obenseits am Federwiderlager 100a abstützt. Die erste Feder 96 befindet sich, wie vorstehend bereits beschrieben, unter Vorspannung zwischen dem Gehäuseboden 72 obenseits und dem unteren Ende der beweglichen Hülse 94 andererseits. In der dargestellten Schließstellung des Doppelsitzventils 1 wird das erste Schließglied 3 mittels der in dieser Schließstellung in der ersten Feder 96 generierten Vorspannung auf seine zugeordnete erste Sitzfläche 2d.1 gedrückt. Dabei verläuft der Kraftfluss von der ersten Feder 96 über das untere Ende der beweglichen Hülse 94 zum Federwiderlager 100a und von dort zur ersten Verstellstange 3a und damit zum ersten Schließglied 3. In dieser Schließstellung steht die zweite Feder 98 gleichfalls unter einer definierten Vorspannung, die das zweite Schließglied 4 gleichfalls auf seine zugeordnete zweite Sitzfläche 2e drückt. Dabei verläuft der diesbezügliche Kraftfluss von der zweiten Feder 98, die sich obenseits am Federwiderlager 100a und damit an der ersten Verstellstange 3a und untenseits an dem unteren Ende des Federgehäuses 102 abstützt, über ein in der als Hohlstange ausgebildeten zweiten Verstellstange 4a platziertes Einlegeteil 4c, auf dem sich wiederum das Federgehäuse 102 untenseits abstützt, zur zweiten Verstellstange 4a und damit zum zweiten Schließglied 4. Beim Öffnungshub und in der vollen Offenstellung H (**Figur 1a**) wird das erste, unabhängig angetriebene Schließglied 3 gegen die Vorspannkraft der ersten Feder 96 von seiner zugeordneten ersten Sitzfläche 2d.1 angehoben und es werden, sobald die Abholstellung des zweiten Schließglieds 4 durch das erste Schließglied 3 vollzogen und die Mitteldichtung 12 zwischen beiden zum Eingriff gelangt ist, beide Schließglieder 3, 4 allein durch die dann von der zweiten Feder 98 generierte Vorspannkraft zusammengedrückt und gegeneinander abgedichtet.

Zur Steuerung eines voll sitzreinigungsfähigen Doppelsitzventils 1 sind wenigstens drei Pilotventile 108.1, 108.2 und 108.3 erforderlich, die in der erfindungsgemäßen Steuereinheit 104, wie in den **Figuren 3** und **4** gezeigt, problemlos zusammen mit den notwendigen, aber nicht dargestellten Wegen zur jeweiligen Führung und Verteilung des Druckmittels D, D1 bis D4, (D4) angeordnet werden können. Dies gilt allerdings nicht, wenn die Steuerung des Druckmittels über eine externe Steuereinheit und die Zuführung desselben in die zugeordneten Druckmittelräume aus der Umgebung des Doppelsitzventils stattfinden. Mehr als ein Mittel zur Stellungserfassung oder Wegmessung, nämlich das erste Mittel 110.1 für die Schließ- und volle Offenstellung H des ersten Schließglieds 3 (**Figuren 1****,** **1a**), ein zweites Mittel 110.2 für den ersten Teilhub T1 des ersten Schließglieds 3 (**Figur 1b**) sowie ein drittes Mittel 110.3 für den zweiten Teilhub T2 (**Figur 1c**), sind zur Überwachung eines sitzreinigungsfähigen Doppelsitzventils 1 erforderlich, die wiederum problemlos zusammen mit den nicht dargestellten zugeordneten Signalleitungen und Verbindungsmitteln und gleichfalls nicht dargestellten Mitteln einer Steuerlogik 111 in der erfindungsgemäßen Steuereinheit 104 angeordnet werden können (**Figuren 3** und **4**). Dabei ist darauf hinzuweisen, dass die Stellungserfassung oder Wegmessung am zweiten Schließglied 4 nicht indirekt auf dem Weg der Stellungserfassung am ersten Schließglied 3 oder direkt über Mittel erfolgt, die vorzugsweise im von außen zugänglichen Bereich des Laternengehäuses 6 angeordnet sind, wie dies in beiden Fällen im Stand der Technik zur Reduzierung des konstruktiven Aufwands bislang der Regelfall ist, sondern originär und zweckmäßig an der mit dem zweiten Schließglied 4 fest verbundenen zweiten Verstellstange 4a oder einem mit dieser in fester Verbindung stehenden Bauteil, wie beispielsweise dem Rezessabschnitt 4b, dessen Stellung von dem dritten Mittel 110.3 detektiert werden kann. Wie **Figur 3** weiterhin zeigt, ist die Anordnung von Mitteln einer Steuerlogik 111 in der Steuereinheit 104 gleichfalls problemlos gegeben. Darüber hinaus ist bei einer in sich geschlossenen ringförmigen Steuereinheit 104 noch genügend ungenutzter Bauraum vorhanden, um beispielsweise ein NICHT-Element 116 anzuordnen, mit dem im Bedarfsfalle, wenn der erste Antriebskolben 74 nicht angesteuert ist, das vierte Druckmittel (D4) wahlweise auf die rückwärtige Seite des ersten Antriebskolbens 74 und damit in den vierten Druckmittelraum 88 zur Unterstützung der Federkraft der ersten Feder 96 mit der Zusatzkraft Z geleitet werden kann (**Figur 1c**).

Der Aufbau eines sitzreinigungsfähigen Doppelsitzventils 1 vom ersten Ventiltyp (F**igur 2**) unterscheidet sich von jenem des zweiten Ventiltyps dadurch, dass das erste Schließglied 3 als Schieberkolben ausgebildet ist, der in der Schließstellung des Doppelsitzventils 1 in einer von der Verbindungsöffnung 2c gebildeten ersten Sitzfläche 2d.2, die als zylindrische Sitzfläche ausgeführt ist, dichtend Aufnahme findet. Hierzu ist in dem Schieberkolben 3 eine die Sitzdichtung 10 vorgesehen, die ausschließlich durch radiale Vorspannung mit der ersten Sitzfläche 2d.2 zusammenwirkt (radiale Dichtung im Gleiteingriff). Die Sitz- und Schließgliedkonfiguration des zweiten Schließglieds 4 entspricht jener des Doppelsitzventils 1 vom zweiten Ventiltyp. Dies schließt auch die Mitteldichtung 12 im zweiten Schließglied 4 ein, die in jeder Offenstellung der beiden Schließglieder 3, 4 für eine sichere Abdichtung des Leckagehohlraumes 5 zu den Innenräumen des Ventilgehäuses 2 sorgt.

Der erfindungsgemäße Antrieb 70 zur Betätigung eines Doppelsitzventils 1 vom ersten Ventiltyp ist uneingeschränkt auch für ein Doppelsitzventil 1 einsetzbar, bei dem das erste Schließglied 3 ebenfalls als Schieberkolben ausgebildet ist, jedoch beim zweiten Schließglied 4 auf eine Mitteldichtung 12 verzichtet wird. Im Unterschied zum vorgeschriebenen ersten Ventiltyp mit Mitteldichtung 12 besitzt bei diesem modifizierten ersten Ventiltyp das zweite Schließglied 4 zur Substitution der Mitteldichtung 12 nunmehr an seinem dem ersten Schließglied 3 zugewandten Ende eine Ausnehmung mit einer im wesentlichen zylindrischen, mit der zylindrischen ersten Sitzfläche 2d.2 fluchtenden Umfangswand, und die Ausnehmung ist so dimensioniert, um während der Öffnungsbewegung den Endabschnitt und die radiale erste Sitzdichtung 10 des ersten Schließgliedes 3 dichtend aufzunehmen, bevor das zweite Schließglied 4 öffnet. Der Prototyp eines diesbezüglichen Doppelsitzventils 1 ist aus der EP 0 039 319 B1 bekannt.

Die einzige Änderung im erfindungsgemäßen Antrieb 70 für das Doppelsitzventil 1 vom ersten Ventiltyp (erste Konfiguration des Antriebs 70) gegenüber dem erfindungsgemäßen Antrieb 70 in der zweiten Konfiguration resultiert darin, dass der Antrieb 70 der Notwendigkeit Rechnung tragen muss, dass durch die Ausbildung des ersten Schließglieds 3 als Schieberkolben nunmehr dessen erste Teiloffenstellung T1 zur Erreichung der ersten Sitzreinigungsstellung durch einen, bezogen auf die Darstellungslage, ersten Teilhub T1 nach unten zu erfolgen hat (**Figur 2a**). Aus diesem Grunde können der zweite Antriebskolben 78 und der dessen Hub nach oben begrenzende Anschlagabschnitt 90a ersatzlos entfallen. Durch den Wegfall des zweiten Antriebskolbens 78 und des Anschlagabschnitts 90a ergibt sich ein Bewegungsfreiheitsgrad des ersten Antriebskolbens 74 nach unten (s. **Figur 2**). Dieser Bewegungsfreiheitsgrad ist so zu bemessen, dass durch die nunmehr mögliche Abwärtsbewegung des ersten Antriebskolbens 74 aus der Schließstellung des Doppelsitzventils 1 heraus, und zwar durch Beaufschlagung des vierten Druckmittelraumes 88 mit dem vierten Druckmittel D4, der erforderliche erste Teilhub T1 generiert wird (erste Konfiguration des Antriebs 70). Die Begrenzung des ersten Teilhubs T1 erfolgt durch einen am Gehäuseboden 72 gebildeten zweiten Anschlag A1.2 (**Figuren 2****,** **2a**). Durch den nunmehr nach unten gerichteten ersten Teilhub T1 wird das erste Schließglied 3 in die erste Teiloffenstellung T1, die erste Sitzreinigungsstellung, überführt, in der zwischen einem nicht bezeichneten leckageraumseitigen zylindrischen Ansatz am ersten Schließglied 3 und der zylindrischen ersten Sitzfläche 2d.2 in der Verbindungsöffnung 2c der als Drosselspalt wirkende erste Ringspalt S1 gebildet ist, über den die erste Sitzreinigungsströmung R1 aus dem ersten Ventilgehäuseteil 2a über die freigelegte erste Sitzfläche 2d.2 in den Leckagehohlraum 5 und von dort über die Verbindungsöffnungen 3d und die Ablaufbohrung 3c in die Umgebung des Doppelsitzventils 1 gelangen kann. Der Vollzug des ersten Teilhubs T1 wird über zweite Mittel 110.2 gemeldet.

Der erste Antriebskolben 74 und der Gehäuse-Deckelteil 73 bilden mit dem umgrenzten vierten Druckmittelraum 88 im Rahmen der ersten Konfiguration des erfindungsgemäßen Antriebs 70 und damit für ein Doppelsitzventil 1 vom ersten Ventiltyp die erste Einzelverstelleinrichtung 300 zur Erzeugung der ersten Teiloffenstellung T1. Die erste Teiloffenstellung T1 wird aus der in **Figur 2** ersichtlichen Schließstellung eingeleitet und schließlich erreicht, wenn dem vierten Druckmittelraum 88 das vierte Druckmittel D4 über den Innenkanal 74a.1 und einen diesen speisenden, nicht dargestellten und bezeichneten Weg zugeführt wird (**Figur 2a**).

Die axiale Festlegung des als Schieberkolben ausgebildeten ersten Schließglieds 3 in seiner Schließstellung, das grundsätzlich in jeder axialen Position innerhalb der zylindrischen Sitzfläche 2d.2 diese Schließstellung einnehmen kann, erfolgt dadurch, dass sich die bewegliche Hülse 94 unter der Vorspannung der ersten Feder 96 in ihrer unteren Endlage befindet und somit einen Anschlag nach oben für das Federwiderlager 100a und damit für die erste Verstellstange 3a und das mit ihr verbundene erste Schließglied 3 bildet, wobei nunmehr das Federwiderlager 100a mit der in dieser Lage durch die zweite Feder 98 generierte Vorspannkraft gegen diesen Anschlag gedrückt wird. Die zweite Feder 98 findet ihre andersseitige Abstützung mittelbar über das auf seiner zweiten Sitzfläche 2e ruhende zweite Schließglied 4 auf dem Weg über das Federgehäuse 102, den Einlegeteil 4c und die zweite Verstellstange 4a.

Die **Figuren 3** und **4** zeigen, wie die Anordnung der Bauteile innerhalb der erfindungsgemäßen Steuereinheit 104 in einer Vollausstattung für ein sitzreinigungsfähiges Doppelsitzventil 1 beispielhaft aussehen kann. Das der Steuereinheit 104 und damit dem Antrieb 70 zentral von außerhalb zugeführte Druckmittel D gelangt über einen Druckmitelanschluss 112 und über einen nicht dargestellten, in axialer Richtung verlaufenden Kanal in einen Verteilungskanal 114 (**Figur 4**), von dem aus die Pilotventile 108.1, 108.2 und 108.3 mit Druckmittel D versorgt werden. Das den vollen Öffnungshub H bewirkende erste Pilotventil 108.1 steuert und beaufschlagt einen nicht bezeichneten Kanal mit dem ersten Druckmittel D1, das in den ersten Druckmittelraum 82 gelangt (**Figuren 1a****,** **2**). Das die erste Teiloffenstellung T1 für das Doppelsitzventil 1 vom zweiten Ventiltyp generierende zweite Pilotventil 108.2 steuert und beaufschlagt einen nicht bezeichneten Kanal mit dem zweiten Druckmittel D2, das in den zweiten Druckmittelraum 84 austritt (**Figuren 3****,** **4** und **1b**). Beim Doppelsitzventil 1 vom ersten Ventiltyp (**Figur 2a**) wird der erste Teilhub T1 durch das vierte Druckmittel D4 bewirkt, das über den in der Hohlstange 74a verlaufenden Innenkanal 74a.1 in den vierten Druckmittelraum 88 oberhalb des ersten Antriebskolbens 74 gelangt (**Figuren 4****,** **3**). Das den zweiten Teilhub T2 erzeugende dritte Pilotventil 108.3 steuert und beaufschlagt einen nicht bezeichneten Kanal mit dem dritten Druckmittel D3, das in den dritten Druckmittelraum 86 austritt (**Figuren 3****,** **1c**). Zur optionalen Beaufschlagung der rückwärtigen Seite des ersten Antriebskolbens 74 zur Erzeugung einer Zusatzkraft Z auf das sich in seiner Schließstellung befindliche erste Schließglied 3 steuert das zweite Pilotventil 108.2 in Verbindung mit dem NICHT-Element 116 den Innenkanal 74a.1 der Hohlstange 74a an, sodass der vierte Druckmittelraum 88 mit dem vierten Druckmittel (D4) (Anmerkung: () steht für Zusatzkraft durch D4) beaufschlagt wird (**Figuren 1****,** **1c**).

Weiterhin bietet die Steuereinheit 104 Raum für die Mittel der Steuerlogik 111 (**Figur 3**). Die Stellung des ersten Schließglieds 3 wird über die Stange 74b in der Steuereinheit 104 abgebildet. An einer nicht bezeichneten Stange befestigte erste Mittel 110.1 melden den Vollzug der Schließ- und der vollen Offenstellung H. An einer nicht bezeichneten weiteren Stange befestigte zweite Mittel 110.2 melden den Vollzug des ersten Teilhubs bzw. der ersten Teiloffenstellung T1 (erstes Schließglied 3). Den Vollzug des zweiten Teilhubs bzw. der zweiten Teiloffenstellung T2 (zweites Schließglieds 4) melden dritte Mittel 110.3, die die Stellung des Rezessabschnittes 4b, der die jeweilige Stellung des zweiten Schließglieds 4 abbildet, detektieren. Bei den vorg. Mitteln 110.1 bis 110.3 kann es sich um berührungslos arbeitende Sensoren handeln, die die Änderung eines magnetischen Feldes registrieren, wobei das jeweilige Magnetfeld durch jeweils wenigstens einen an der Stange 74b oder dem Rezessabschnitt 4b befestigten Permanentmagneten erzeugt wird.

Zum Schutz der Steuereinheit 104 gegen äußere Einflüsse kann diese mit einem Mantel 104b umhüllt sein, der beispielsweise metallisch ausgeführt ist. Die Leuchtmelder 104a in den verschiedensten vorstehend beschriebenen Ausführungsformen sind beispielsweise entweder hinter transparenten Fenstern im Mantel 104b sichtbar oder sie sind zumindest mit ihrer äußeren Berandung in den Mantel 104b integriert.

Es versteht sich, dass der erfindungsgemäße Antrieb 70 auch für ein Doppelsitzventil des ersten oder des zweiten Ventiltyps geeignet ist, bei dem jeweils die beiden Sitzreinigungsstellungen (erste und zweite Teiloffenstellung T1, T2) nicht erforderlich oder gewünscht sind. In diesen Fällen entfallen alle Bauteile, vor allem der zweite und der dritte Antriebskolben 78, 80 sowie die Mittel zur Steuerung und Beaufschlagung der den Antriebskolben 78, 80 zugeordneten Druckmittelräume mit Druckmittel, die die Funktionsfähigkeit der ersten und der zweiten Einzelverstelleinrichtung 300, 400 ausmachen, wenn diese Bauteile im Rahmen der Hauptverstelleinrichtung 200 oder der Generierung einer Zusatzkraft Z zur Unterstützung der ersten Feder 96 nicht zwingend erforderlich sind.

Sowohl der Antrieb 70 als auch die Steuereinheit 104 stellen jeweils eine eigenständige erfinderische Lösung dar. Der erfindungsgemäße Antrieb 70 ist auch ohne die erfindungsgemäße Steuereinheit 104 realisierbar, soweit es bei letzterer um die interne Ausgestaltung in der vorstehend beschriebenen Weise mit ersten und zweiten Steuerungsmitteln im Umfang des Anspruchs 8 geht. Umgekehrt kann auch die Steuereinheit 104, soweit es ihre erfindungsgemäße Platzierung betrifft, an jedwedem Antrieb für Doppelsitzventile, wenn dieser entsprechend angepasst ist, angeordnet werden.

Der erfindungsgemäße Antrieb 70 allein, d.h. ohne die vorbeschriebene Steuereinheit 104 mit ihren internen Merkmalen im Umfang des Anspruchs 8, kann auch in herkömmlicher Weise mit einer auf der dem Ventilgehäuse 2 abgewandten Seite des Antriebs 70 angeordneten Steuereinheit versehen werden, wie sie aus den in der Beschreibungseinleitung erwähnten Dokumenten zum diesbezüglichen Stand der Technik beschrieben ist. In diesem Falle ist mit Blick auf eine Stellungserfassung der ersten Verstellstange 3a diese mittelbar über die Kolbenstange 76 hinaus zu verlängern und verschieblich abgedichtet durch den Kopfbereich des Gehäuse-Deckelteils 73 hindurchzuführen. Die Druckmittelräume sind dann in an sich bekannter Weise an zugeordnete Wege für das jeweilige Druckmittel anzuschließen.

### BEZUGSZEICHENLISTE DER VERWENDETEN ABKÜRZUNGEN

- 1: Doppelsitzventil

- 2: Ventilgehäuse
- 2a: erster Ventilgehäuseteil
- 2b: zweiter Ventilgehäuseteil
- 2c: Verbindungsöffnung
- 2d.1: erste Sitzfläche
- 2d.2: zylindrische erste Sitzfläche
- 2e: zweite Sitzfläche (radial; konisch; eben und senkrecht zur Längsachse)

- 3: erstes Schließglied (Sitzteller oder Schieberkolben)
- 3a: erste Verstellstange
- 3b: Rohrschaft (erster Druckausgleichkolben)
- 3c: Ablaufbohrung
- 3d: Verbindungsöffnung

- 4: zweites Schließglied (Sitzteller oder Schieberkolben)
- 4a: zweite Verstellstange (Hohlstange; zweiter Druckausgleichkolben)
- 4b: Rezessabschnitt
- 4c: Einlegeteil

- 5: Leckagehohlraum

- 6: Laternengehäuse
- 8: Sitzring
- 9: Spannring
- 10: erste Sitzdichtung (radial dichtend)
- 11: zweite Sitzdichtung
- 12: Mitteldichtung
- 13: erste Stangendichtung
- 14: zweite Stangendichtung
- 17: Gehäusering

- 70: Antrieb
- 71: Gehäuse
- 72: Gehäuseboden
- 73: Gehäuse-Deckelteil

- 74: erster Antriebskolben
- 74a: Hohlstange
- 74a.1: Innenkanal
- 74b: Stange

- 76: Kolbenstange
- 78: zweiter Antriebskolben
- 80: dritter Antriebskolben
- 82: erster Druckmittelraum
- 84: zweiter Druckmittelraum
- 86: dritter Druckmittelraum
- 88: vierter Druckmittelraum
- 90: feste Hülse
- 90a: Anschlagabschnitt
- 94: bewegliche Hülse
- 96: erste Feder
- 98: zweite Feder

- 100a: Federwiderlager
- 100b: Federwiderlager-Rezess

- 102: Federgehäuse

- 104: Steuereinheit
- 104a: Leuchtmelder
- 104b: Mantel
- 104c: erste Grundlochbohrung
- 104d: zweite Grundlochbohrung

- 106: Befestigungsmittel

- 108.1: erstes Pilotventil (Haupthub H; D1)
- 108.2: zweites Pilotventil (erster Teilhub T1; D2; D4))
- 108.3: drittes Pilotventil (zweiter Teilhub T2; D3)

- 110.1: erste Mittel zur Stellungserfassung oder Wegmessung (erstes Schließglied; Schließstellung, Offenstellung H)
- 110.2: zweite Mittel zur Stellungserfassung oder Wegmessung (erstes Schließglied; Sitzreinigung unten; erster Teilhub bzw. erste Sitzreinigungsstellung T1)
- 110.3: dritte Mittel zur Stellungserfassung oder Wegmessung (zweites Schließglied; Sitzreinigung oben; zweiter Teilhub bzw. zweite Sitzreinigungsstellung T2)

- 111: Mittel einer Steuerlogik
- 112: Druckmittelanschluss
- 114: Verteilungskanal
- 116: NICHT-Element

- 200: Hauptverstelleinrichtung
- 300: erste Einzelverstelleinrichtung
- 400: zweite Einzelverstelleinrichtung

- A1.1: erster Anschlag (für ersten Teilhub T1 des zweiten Ventiltyps)
- A1.2: zweiter Anschlag (für ersten Teilhub T1 des ersten Ventiltyps)
- A2: dritter Anschlag (für zweiten Teilhub)
- D: Druckmittel (allgemein)
- D1: erstes Druckmittel (Haupthub, voller Öffnungshub H)
- D2: zweites Druckmittel (erster Teilhub T1 beim zweiten Ventiltyp; Figur 1b)
- D3: drittes Druckmittel (zweiter Teilhub T2)
- D4: viertes Druckmittel (erster Teilhub T1 beim ersten Ventiltyp; Figur 2a)
- (D4): viertes Druckmittel zur Erzeugung einer Zusatzkraft Z (zweiter Ventiltyp; Figur 1c)

- H: Offenstellung (Öffnungshub; volle Offenstellung; Haupthub)
- R1: erste Sitzreinigungsströmung
- R2: zweite Sitzreinigungsströmung

- S1: erster Ringspalt
- S2: zweiter Ringspalt

- T1: erster Teilhub (erste Teiloffenstellung)
- T2: zweiter Teilhub (zweite Teiloffenstellung)

- Z: Zusatzkraft

## Patentansprüche

1. Doppelsitzventil mit einem Antrieb (70) zum Schalten des Ventils, mit zwei unabhängig voneinander bewegbaren Schließgliedern (3, 4), die zwischen sich einen Leckagehohlraum (5) einschließen, der mit der Umgebung des Doppelsitzventils (1) verbunden ist, wobei das erste Schließglied (3) nach einem Teilhub an dem zweiten Schließglied (4) zur Anlage kommt und dieses bei seiner weiteren Öffnungsbewegung gleichfalls in eine Offenstellung (H) überführt, mit konzentrisch ineinander angeordneten Verstellstangen (3a, 4a) für die Schließglieder (3, 4), die aus einem Ventilgehäuse (2) nach außen heraus- und in den Antrieb (70) hineingeführt sind und über die die Schließglieder (3, 4), zusätzlich zu der Offenstellung (H) und unabhängig voneinander, wahlweise jeweils in eine Teiloffenstellung (T1, T2 verbringbar sind, wobei die Offenstellung (H) durch eine Hauptverstelleinrichtung (200) und die Teiloffenstellungen (T1, T2) durch den jeweiligen Schließgliedern (3, 4) zugeordnete Einzelverstelleinrichtungen (300, 400) erzeugt werden und die Einzelverstelleinrichtungen (300, 400) zum Einen zwischen der Hauptverstelleinrichtung (200) und dem Ventilgehäuse (2) und zum Anderen zusammen mit der Hauptverstelleinrichtung (200) in einem gemeinsamen Gehäuse (71) des Antriebs (70) angeordnet sind, mit einem ersten Antriebskolben (74) der Hauptverstelleinrichtung (200), der in Richtung der zugeordneten Offenstellung (H) an der ersten Verstellstange (3a) für das erste Schließglied (3) gegen die Kraft einer ersten Feder (96) angreift, und mit einem dritten Antriebskolben (80) der zweiten Einzelverstelleinrichtung (400) für das zweite Schließglied (4), der in Richtung der zugeordneten zweiten Teiloffenstellung (T2) zum Eingriff in eine Mitnahmeverbindung mit der zweiten Verstellstange (4a) des zweiten Schließglieds (4) verbringbar ist, wobei der erste Antriebskolben (74) auf seiner dem Ventilgehäuse (2) zugewandten Seite einen ersten Druckmittelraum (82) zur Erzeugung der Offenstellung (H) begrenzt und auf der dem ersten Druckmittelraum (82) abgewandten Seite des dritten Antriebskolbens (80) ein dritter Druckmittelraum (86) zur Erzeugung der zweiten Teiloffenstellung (T2) vorgesehen ist, und wobei der erste Antriebskolben (74) unmittelbar oder mittelbar mit der ersten Verstellstange (3a) fest verbunden ist, **dadurch gekennzeichnet, dass** der einerseits vom ersten Antriebskolben (74) begrenzte erste Druckmittelraum (82) andererseits von einem das Gehäuse (71) quer zur Längsachse des Antriebs (70) durchsetzenden Gehäuseboden (72) begrenzt ist,
• dass der Antrieb (70) bei Ausgestaltung des Doppelsitzventils (1) mit einem als Schieberkolben ausgebildeten ersten Schließglied (3) und einem als Sitzteller ausgebildeten zweiten Schließglied (4) auf der dem Ventilgehäuse (2) abgewandten Seite des ersten Antriebskolbens (74) einen vierten Druckmittelraum (88) zur Erzeugung der ersten Teiloffenstellung (T1) aufweist, wobei der erste Antriebskolben (74) aus der Schließstellung des Doppelsitzventils (1) heraus im Rahmen der ersten Einzelverstelleinrichtung (300) für das erste Schließglied (3) um die erste Teiloffenstellung (T1) entgegen der Richtung der Offenstellung (H) axial verschieblich ist, und
• dass der Antrieb (70) bei Ausgestaltung des Doppelsitzventils (1) mit zwei als Sitzteller ausgebildeten Schließgliedern (3, 4) im Gehäuseboden (72) auf der Seite des ersten Antriebskolbens (74) einen zweiten Antriebskolben (78) aufweist, der derart axial verschieblich ist, dass er mit dem Gehäuseboden (72) einen zweiten Druckmittelraum (84) der ersten Einzelverstelleinrichtung (300) für das erste Schließglied (3) zur Erzeugung der ersten Teiloffenstellung (T1) bildet, wobei der zweite Antriebskolben (78) um den ersten Teilhub (T1) in Richtung der Offenstellung (H) zum Eingriff in eine Mitnahmeverbindung mit dem ersten Antriebskolben (74) verbringbar ist.

2. Doppelsitzventil mit einem Antrieb (70) zum Schalten des Ventils nach Anspruch 1, **dadurch gekennzeichnet,**
**dass** die erste Feder (96) zwischen dem Gehäuseboden (72) und dem Ventilgehäuse (2) angeordnet ist und jeweils unmittelbar oder mittelbar einerseits am Gehäuseboden (72) und andererseits an der ersten Verstellstange (3a) angreift.

3. Doppelsitzventil mit einem Antrieb (70) zum Schalten des Ventils nach Anspruch 1 oder 2, **dadurch gekennzeichnet,**
**dass** das Gehäuse (71) in seinem dem Ventilgehäuse (2) zugewandten Gehäuseabschnitt durch eine Steuereinheit (104) gebildet ist, die im axialen Erstreckungsbereich des Antriebs (70) einen radial außenseitigen Teil desselben bildet.

4. Doppelsitzventil mit einem Antrieb (70) zum Schalten des Ventils nach Anspruch 3, **dadurch gekennzeichnet,**
**dass** die Steuereinheit (104) innerhalb der größten äußeren radialen Abmessung des Antriebs (70) positioniert ist, wobei sich diese Abmessung allein aus den die Kinematik des Antriebs (70) mechanisch definierenden Bauteilen des Antriebs (70) generiert.

5. Doppelsitzventil mit einem Antrieb (70) zum Schalten des Ventils nach Anspruch 3 oder 4, **dadurch gekennzeichnet,**
**dass** die Steuereinheit (104) ringförmig ausgebildet ist.

6. Doppelsitzventil mit einem Antrieb (70) zum Schalten des Ventils nach Anspruch 5, **dadurch gekennzeichnet,**
**dass** die ringförmige Steuereinheit (104) in sich geschlossen ausgeführt ist.

7. Doppelsitzventil mit einem Antrieb (70) zum Schalten des Ventils nach einem der Ansprüche 3 bis 6, **dadurch gekennzeichnet,**
**dass** die Steuereinheit (104) auf der dem Ventilgehäuse (2) zugewandten Seite des Gehäusebodens (72) angeordnet und dort mit diesem form- und/oder kraftschlüssig verbunden ist.

8. Doppelsitzventil mit einem Antrieb (70) zum Schalten des Ventils nach einem der Ansprüche 3 bis 7, **dadurch gekennzeichnet,**
**dass** die Steuereinheit (104) sämtliche Anschlüsse und Kanäle zur Steuerung eines Druckmittels (D; D1, D2, D3; D4, (D4)) zur Beaufschlagung der maximal vier Druckmittelräume (82, 84, 86, 88) durch wenigstens ein Pilotventil (108.1), sämtliche Anschlüsse, elektrische Leitungen und Signalleitungen wenigstens eines Mittels zur Stellungserfassung oder Wegmessung (110.1) und sämtliche Mittel einer Steuerlogik (111) aufnimmt.

9. Doppelsitzventil mit einem Antrieb (70) zum Schalten des Ventils nach einem der Ansprüche 3 bis 8, **dadurch gekennzeichnet,**
**dass** im ersten Antriebskolben (74) eine Hohlstange (74a) fest verankert ist, die, ausgehend von dem ersten Antriebskolben (74), den Gehäuseboden (72) verschieblich und abgedichtet durchdringt, verschieblich in eine erste Grundlochbohrung (104c) in der Steuereinheit (104) eingreift und dort endet, dass ein die Hohlstange (74a) durchgängig durchsetzender Innenkanal (74a.1) den vierten Druckmittelraum (88) mit der ersten Grundlochbohrung (104c) fluidgängig verbindet, und dass der ersten Grundlochbohrung (104c) ein viertes Druckmittel (D4; (D4)) zugeführt werden kann.

10. Doppelsitzventil mit einem Antrieb (70) zum Schalten des Ventils nach einem der Ansprüche 3 bis 9, **dadurch gekennzeichnet,**
**dass** im ersten Antriebskolben (74) eine Stange (74b) fest verankert ist, die, ausgehend von dem ersten Antriebskolben (74), den Gehäuseboden (72) verschieblich und abgedichtet durchdringt, verschieblich in eine zweite Grundlochbohrung (104d) in der Steuereinheit (104) eingreift und dort endet, und dass der Stange (74b) wenigstens das erste Mittel zur Stellungserfassung oder Wegmessung (110.1) zugeordnet ist.

11. Doppelsitzventil mit einem Antrieb (70) zum Schalten des Ventils nach Anspruch 10, **dadurch gekennzeichnet,**
**dass** die Hohlstange (74a) und die Stange (74b) diametral im ersten Antriebskolben (74) angeordnet sind.

12. Doppelsitzventil mit einem Antrieb (70) zum Schalten des Ventils nach einem der Ansprüche 3 bis 11, **dadurch gekennzeichnet,**
**dass** dem antriebsseitigen Ende der zweiten Verstellstange (4a) ein in der Steuereinheit (104) angeordnetes drittes Mittel zur Stellungserfassung oder Wegmessung (110.3) zugeordnet ist.

## Claims

1. A double seat value with a drive (70) for switching the valve, with two closing elements (3, 4) that are movable independently of each other, which include between themselves a leakage hollow space (5), which is connected with the surrounding area of the double seat valve (1), wherein the first closing element (3) comes into contact on the second closing element (4) after a partial stroke and also transfers it in the case of its further opening movement to an open position (H), with adjusting rods (3a, 4a) arranged in each other concentrically for the closing elements (3, 4), which are guided out of a valve housing (2) outwards and into the drive (70) and via which the closing elements (3, 4), in addition to the open position (H) and independently of each other, can each be brought optionally into a partially open position (T1, T2), wherein the open position (H) is generated by a main adjusting apparatus (200) and the partially open positions (T1, T2) are generated by the individual adjusting apparatuses (300, 400) assigned to the respective closing elements (3, 4) and the individual adjusting apparatuses (300, 400) are arranged on one hand between the main adjusting apparatus (200) and the valve housing (2) and on the other hand together with the main adjusting apparatus (200) in a common housing (71) of the drive (70), with a first drive piston (74) of the main adjusting apparatus (200), which engages in the direction of the assigned open position (H) at the first adjusting rod (3a) for the first closing element (3) against the force of a first spring (96), and with a third drive piston (80) of the second individual adjusting apparatus (400) for the second closing element (4), which can be brought to engage in a driving connection with the second adjusting rod (4a) of the second closing element (4) in the direction of the assigned second partially open position (T2), wherein the first drive piston (74) delimits on its side facing the valve housing (2) a first pressure medium chamber (82) for generating the open position (H) and a third pressure medium chamber (86) is provided on the side of the third drive piston (80) facing away from the first pressure medium chamber (82) for generating the second partially open position (T2),
and wherein
the first drive piston (74) is securely connected either directly or indirectly to the first adjusting rod (3a), **characterized in that**
• the first pressure medium chamber (82) delimited on the one side by the first drive piston (74) is delimited on the other side by a housing floor (72) spanning the housing (71) transversely to the longitudinal axis of the drive (70),
• the drive (70) has a fourth pressure medium chamber (88) for generating the first partially open position (T1) in the case of a design of the double seat valve (1) with a first closing element (3) designed as a slide piston and a second closing element (4) designed as a seat plate on the side of the first drive piston (74) facing away from the valve housing (2), wherein the first drive piston (74) is axially movable out of the closed position of the double seat valve (1) within the framework of the first individual adjusting apparatus (300) for the first closing element (3) around the first partially open position (T1) opposite the direction of the open position (H), and
• the drive (70) has a second drive piston (78) in the case of a design of the double seat valve (1) with two closing elements (3, 4) designed as seatplates in the housing floor (72) on the side of the first drive piston (74), which is axially movable such that it forms with the housing floor (72) a second pressure medium chamber (84) of the first individual adjusting apparatus (300) for the first closing element (3) for generating the first partially open position (T1), wherein the second drive piston (78) can be brought to engage in a driving connection with the first drive piston (74) around the first partial stroke (T1) in the direction of the open position (H).

2. The double seat valve with a drive (70) for switching the valve according to claim 1, **characterized in that**
the first spring (96) is arranged between the housing floor (72) and the valve housing (2) and engages respectively directly or indirectly on one side on the housing floor (72) and on the other side on the first adjusting rod (3a).

3. The double seat valve with a drive (70) for switching the valve according to claim 1 or 2, **characterized in that**
the housing (71) in its housing section facing the valve housing (2) is formed by a control unit (104), which forms a radial outside part of the same in the axial extension area of the drive (70).

4. The double seat valve with a drive (70) for switching the valve according to claim 3, **characterized in that**
the control unit (104) is positioned within the largest outer radial dimension of the drive (70), wherein this dimension is generated solely from the components of the drive (70) mechanically defining the kinematics of the drive (70).

5. The double seat valve with a drive (70) for switching the valve according to claim 3 or 4, **characterized in that**
the control unit (104) is designed annularly.

6. The double seat valve with a drive (70) for switching the valve according to claim 5, **characterized in that**
the annular control unit (104) is designed closed.

7. The double seat valve with a drive (70) for switching the valve according to one of claims 3 to 6, **characterized in that**
the control unit (104) is arranged on the side of the housing floor (72) facing the valve housing (2) and is connected with it there in a form-locking and/or friction-locked manner.

8. The double seat valve with a drive (70) for switching the valve according to one of claims 3 to 7, **characterized in that**
the control unit (104) accommodates all connections and channels for controlling a pressure medium (D; D1, D2, D3; D4 (D4)) for pressurizing the maximum of four pressure medium chambers (82, 84, 86, 88) through at least one pilot valve (108.1), all connections, electrical lines and signal lines of at least one means for position detection or distance measurement (110.1) and all means of control logic (111).

9. The double seat valve with a drive (70) for switching the valve according to one of claims 3 to 8, **characterized in that**
a hollow rod (74a) is securely anchored in the first drive piston (74), which, starting from the first drive piston (74), penetrates the housing floor (72) in a movable and sealed manner, engages in a movable manner in a first blind hole (104c) in the control unit (104) and ends there
an inner channel passing through the entire hollow rod (74a) connects in a fluid-accessible manner the fourth pressure medium chamber (88) with the first blind hole (104c), and
a fourth pressure medium (D4; (D4)) can be fed to the first blind hole (104c).

10. The double seat valve with a drive (70) for switching the valve according to one of claims 3 to 9, **characterized in that**
a rod (74b) is securely anchored in the first drive piston (74), which, starting from the first drive piston (74), penetrates the housing floor (72) in a movable and sealed manner, engages in a movable manner in a second blind hole (104d) in the control unit (104) and ends there, and
at least the first means for position detection or distance measurement (110.1) is assigned to the rod (74b).

11. The double seat valve with a drive (70) for switching the valve according to claim 10, **characterized in that**
the hollow rod (74a) and the rod (74b) are arranged diametrically in the first drive piston (74).

12. The double seat valve with a drive (70) for switching the valve according to one of claims 3 to 11, **characterized in that**
a third means for position detection or distance measurement (110.3) arranged in the control unit (104) is assigned to the drive-side end of the second adjusting rod (4a).

## Revendications

1. Vanne à double siège avec un entraînement (70) pour commander la vanne, avec deux organes de fermeture (3, 4) déplaçables indépendamment l'un de l'autre, qui définissent entre eux un interstice collecteur de fuite (5), qui est relié à l'environnement de la vanne à double siège (1), dans laquelle le premier organe de fermeture (3) vient s'appuyer contre le second organe de fermeture (4) après une course partielle et transfère également celui-ci lors de son mouvement d'ouverture ultérieur dans une position ouverte (H), avec des tiges de réglage (3a, 4a) des organes de fermeture (3, 4) disposées concentriquement les unes dans les autres, qui sont extraites d'un corps de vanne (2) vers l'extérieur et introduites dans l'entraînement (70) et au moyen desquelles les organes de fermeture (3, 4) peuvent être mis au choix respectivement dans une position partiellement ouverte (T1, T2) en plus de la position ouverte (H) et indépendamment l'un de l'autre, dans laquelle la position ouverte (H) est créée par un dispositif de réglage principal (200) et les positions partiellement ouvertes (T1, T2) sont générées par des dispositifs de réglage individuels (300, 400) associés aux organes de fermeture (3, 4) respectifs et les dispositifs de réglage individuels (300, 400) sont disposés d'une part entre le dispositif de réglage principal (200) et le corps de vanne (2), d'autre part conjointement avec le dispositif de réglage principal (200) dans un boîtier commun (71) de l'entraînement (70), avec un premier piston d'entraînement (74) du dispositif de réglage principal (200), qui agit dans la direction de la position ouverte associée (H) sur la première tige de réglage (3a) du premier organe de fermeture (3) contre la force d'un premier ressort (96), et avec un troisième piston d'entraînement (80) du second dispositif de réglage individuel (400) du second organe de fermeture (4), qui peut être déplacé vers la seconde position partiellement ouverte associée (T2) pour s'engager dans un raccord d'entraînement avec la seconde tige de réglage (4a) du second organe de fermeture (4), dans laquelle le premier piston d'entraînement (74) délimite une première chambre à fluide sous pression (82) servant à créer la position ouverte (H) du côté tourné vers le corps de vanne (2) et une troisième chambre à fluide sous pression (86) servant à créer la seconde position partiellement ouverte (T2) est prévue du côté du troisième piston d'entraînement (80) opposé à la première chambre à fluide sous pression (82),
et dans laquelle
le premier piston d'entraînement (74) est relié de manière fixe directement ou indirectement à la première tige de réglage (3a), **caractérisée en ce que**
• la première chambre à fluide sous pression (82) délimitée d'un côté par le premier piston d'entraînement (74) est délimitée de l'autre côté par un fond de boîtier (72) traversant le boîtier (71) transversalement à l'axe longitudinal de l'entraînement (70),
• l'entraînement (70) entrant dans la constitution de la vanne à double siège (1) avec un premier organe de fermeture (3) conçu comme un piston coulissant et un second organe de fermeture (4) conçu comme un plateau d'assise présente une quatrième chambre à fluide sous pression (88) servant à créer la première position partiellement ouverte (T1) du côté du premier piston d'entraînement (74) opposé au corps de vanne (2), dans laquelle le premier piston d'entraînement (74) est déplaçable axialement de la première position partiellement ouverte (T1) en sens contraire de la position ouverte (H) depuis la position de fermeture de la vanne à double siège (1) dans le cadre du premier dispositif de réglage individuel (300) du premier organe de fermeture (3), et que
• l'entraînement (70) entrant dans la constitution de la vanne à double siège (1) avec deux organes de fermeture (3, 4) conçus comme des plateaux d'assise présente un second piston d'entraînement (78) dans le fond de boîtier (72) du côté du premier piston d'entraînement (74), qui est déplaçable axialement de sorte qu'il forme avec le fond de boîtier (72) une deuxième chambre à fluide sous pression (84) du premier dispositif de réglage individuel (300) du premier organe de fermeture (3) servant à créer la première position partiellement ouverte (T1), dans laquelle le second piston d'entraînement (78) peut être amené de la première course partielle (T1) vers la position ouverte (H) pour s'engager dans un raccord d'entraînement avec le premier piston d'entraînement (74).

2. Vanne à double siège avec un entraînement (70) pour commander la vanne selon la revendication 1, **caractérisée en ce**
**que** le premier ressort (96) est disposé entre le fond de boîtier (72) et le corps de vanne (2) et qu'il agit respectivement directement ou indirectement d'un côté sur le fond de boîtier (72) et de l'autre côté sur la première tige de réglage (3a).

3. Vanne à double siège avec un entraînement (70) pour commander la vanne selon la revendication 1 ou 2, **caractérisée en ce**
**que** le boîtier (71) est formé dans sa section tournée vers le corps de vanne (2) par une unité de commande (104), qui forme une partie d'elle-même radialement extérieure dans la zone d'extension axiale de l'entraînement (70).

4. Vanne à double siège avec un entraînement (70) pour commander la vanne selon la revendication 3, **caractérisée en ce**
**que** l'unité de commande (104) est positionnée à l'intérieur de la dimension radiale extérieure, la plus grande de l'entraînement (70), dans laquelle cette dimension est seulement générée à partir des composants de l'entraînement (70) définissant mécaniquement la cinématique de l'entraînement (70).

5. Vanne à double siège avec un entraînement (70) pour commander la vanne selon la revendication 3 ou 4, **caractérisée en ce**
**que** l'unité de commande (104) est de forme annulaire.

6. Vanne à double siège avec un entraînement (70) pour commander la vanne selon la revendication 5, **caractérisée en ce**
**que** l'unité de commande (104) de forme annulaire est fermée sur elle-même.

7. Vanne à double siège avec un entraînement (70) pour commander la vanne selon l'une des revendications 3 à 6, **caractérisée en ce**
**que** l'unité de commande (104) est disposée du côté du fond de boîtier (72) tourné vers le corps de vanne (2) et y est relié avec celui-ci par complémentarité de forme et/ou de force.

8. Vanne à double siège avec un entraînement (70) pour commander la vanne selon l'une des revendications 3 à 7, **caractérisée en ce**
**que** l'unité de commande (104) intègre l'ensemble des connexions et des canaux servant à commander un fluide sous pression (D ; D1, D2, D3 ; D4, (D4)) pour alimenter au maximum les quatre chambres à fluide sous pression (82, 84, 86, 88) à l'aide au moins d'une vanne pilote (108.1), l'ensemble des connexions, des câbles électriques et des lignes de transmission de signaux d'au moins un moyen de détection de position ou de mesure de course (110.1) et tous les moyens d'une logique de commande (111).

9. Vanne à double siège avec un entraînement (70) pour commander la vanne selon l'une des revendications 3 à 8, **caractérisée en ce**
**qu'**une tige creuse (74a) est ancrée fixement dans le premier piston d'entraînement (74), qui traverse le fond de boîtier (72) de manière coulissante et étanche en partant du premier piston d'entraînement (74), s'engage en coulissant dans un premier trou borgne (104c) percé à l'intérieur de l'unité de commande (104) et y aboutisse,
**qu'**un canal intérieur (74a.1) traversant la tige creuse (74a) sans interruption relie la quatrième chambre à fluide sous pression (88) au premier trou borgne (104c) d'une manière accessible au fluide, et qu'un quatrième fluide sous pression (D4 ; D4)) peut alimenter le premier trou borgne (104c).

10. Vanne à double siège avec un entraînement (70) pour commander la vanne selon l'une des revendications 3 à 9, **caractérisée en ce**
**qu'**une tige (74b) est ancrée fixement dans le premier piston d'entraînement (74), qui traverse le fond de boîtier (72) de manière coulissante et étanche en partant du premier piston d'entraînement (74), s'engage en coulissant dans un second trou borgne (104d) percé à l'intérieur de l'unité de commande (104) et y aboutisse, et que le premier moyen de détection de position ou de mesure de course (110.1) est associé au moins à la tige (74b).

11. Vanne à double siège avec un entraînement (70) pour commander la vanne selon la revendication 10, **caractérisée en ce**
**que** la tige creuse (74a) et la tige (74b) sont disposées diamétralement dans le premier piston d'entraînement (74).

12. Vanne à double siège avec un entraînement (70) pour commander la vanne selon l'une des revendications 3 à 11, **caractérisée en ce**
**qu'**un troisième moyen de détection de position ou de mesure de course (110.3) disposé dans l'unité de commande (104) est associé à l'extrémité de la seconde tige de réglage (4a) du côté de l'entraînement.
